(19) Europäisches Patentamt
European Patent Office
Office européen des brevets

(11) EP 2 703 902 B1

(12) # EUROPEAN PATENT SPECIFICATION

(45) Date of publication and mention of the grant of the patent:
**23.03.2016 Bulletin 2016/12**

(21) Application number: **12777617.7**

(22) Date of filing: **24.04.2012**

(51) Int Cl.:
***G03G 15/02*** (2006.01) ***C08G 77/22*** (2006.01)
***F16C 13/00*** (2006.01)

(86) International application number:
**PCT/JP2012/061512**

(87) International publication number:
**WO 2012/147983 (01.11.2012 Gazette 2012/44)**

(54) **CHARGING MEMBER, METHOD FOR PRODUCING CHARGING MEMBER, ELECTROPHOTOGRAPHIC DEVICE, AND PROCESSOR CARTRIDGE**

AUFLADUNGSELEMENT, VERFAHREN ZUR HERSTELLUNG EINES AUFLADUNGSELEMENTS, ELEKTROPHOTOGRAPHISCHE VORRICHTUNG UND PROZESSORKARTUSCHE

ÉLÉMENT CHARGÉ, SON PROCÉDÉ DE FABRICATION, DISPOSITIF ÉLECTROPHOTOGRAPHIQUE ET CARTOUCHE DE PROCESSEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2011 JP 2011101519**

(43) Date of publication of application:
**05.03.2014 Bulletin 2014/10**

(73) Proprietor: **Canon Kabushiki Kaisha**
**Tokyo 146-8501 (JP)**

(72) Inventors:
- **KODAMA, Masataka**
  **Tokyo 146-8501 (JP)**
- **KURODA, Noriaki**
  **Tokyo 146-8501 (JP)**
- **SUZUMURA, Noriko**
  **Tokyo 146-8501 (JP)**
- **TOMOMIZU, Yuya**
  **Tokyo 146-8501 (JP)**
- **MASU, Hiroki**
  **Tokyo 146-8501 (JP)**

(74) Representative: **TBK**
**Bavariaring 4-6**
**80336 München (DE)**

(56) References cited:
**EP-A1- 1 834 217**
**EP-A1- 1 991 915**
**JP-A- 5 150 617**
**JP-A- 2002 080 785**
**JP-A- 2002 174 963**
**JP-A- 2006 064 750**
**JP-A- 2009 058 634**
**JP-A- 2012 093 720**
**US-A1- 2010 041 851**
**US-A1- 2010 135 695**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 703 902 B1

## Description

### Technical Field

The present invention relates to a charging member to be used in an electrophotographic apparatus or the like, a method of producing the charging member, an electrophotographic apparatus, and a process cartridge.

### Background Art

Members for electrophotography such as a charging member that is brought into contact with a surface of a photosensitive member to charge the surface, a developing member for forming an electrostatic latent image formed on the surface of the photosensitive member into a toner image, and a cleaning member that removes toner adhering to the photosensitive member have been used in an electrophotographic apparatus.

A charging member having a support and an elastic layer (electro-conductive elastic layer) provided on the outer periphery of the support is available as the charging member from the viewpoint of sufficiently securing an abutting nip with the photosensitive member. In general, the elastic layer (electro-conductive elastic layer) often contains a relatively large amount of a low-molecular weight component. The surface layer is provided on the outer periphery of the elastic layer for suppressing bleedout of the low-molecular weight component.

PTL 1 discloses the following technology. An irregular shape is formed with a surface layer formed by using a coating agent for forming a surface layer obtained by adding particles to a binder, and then a fine, horizontal streak-like image failure (charging horizontal streak) due to abnormal discharge from a charging member is suppressed with the shape. However, the coating agent to which the various particles have been added involves a problem in terms of its storage stability owing to, for example, sedimentation of the particles caused by their agglomerate.

In addition, PTL 2 discloses a technology for thinning an insulative surface layer to which no particle has been added for avoiding the problem concerning the storage stability of the coating agent.

In addition, the charging horizontal streak occurs owing to insufficient charge provided from the charging member to a photosensitive member. In view of the foregoing, PTL 2 enables provision of sufficient charge to the photosensitive member as described below. An electric capacitance of the surface layer is increased by increasing an electrical resistance value of the surface layer and thinning the layer, and further, a quantity of charge to be supplied to the surface layer of the charging member is increased by reducing an electrical resistance value of an elastic layer.

### Citation List

#### Patent Literature

PTL 1: Japanese Patent Application Laid-Open No. 2005-345801
PTL 2: Japanese Patent Application Laid-Open No. 2009-086263

## SUMMARY OF THE INVENTION

### Technical Problem

However, an investigation conducted on the charging member according to PTL 2 has shown that a vertical streak image resulting from a cleaning failure may occur in an electrophotographic apparatus. The vertical streak image is an image that occurs when transfer residual waste toner escapes through a cleaning member in a cleaning step. The escaping of the waste toner is considered to occur owing to occurrence of a chatter mark in an elastic blade as the cleaning member due to a gradual increase of a coefficient of friction between the elastic blade and the photosensitive member caused by an increase in number of prints. In addition, the investigation has revealed that the charging member contributes to the increase of the coefficient of friction.

The charging member charges the surface of the photosensitive member by means of discharge occurring at a gap near a contacting nip with the photosensitive member, with the result that a corona product such as $O_3$ and $NO_x$ is produced, though its amount is slight. It is assumed that the charging member brings a substance such as the corona products and abrasion powder on the surface of the photosensitive member into press contact with the surface of the photosensitive member to fix the substance to the surface, thereby increasing the coefficient of friction between the photosensitive member and the cleaning member. In addition, such increase in coefficient of friction of the surface of the photosensitive member has appeared remarkably in the charging member described in PTL 2. A possible cause for

the foregoing is as described below. As the charging member described in PTL 2 has a low surface hardness, an area of contact between the charging member and the photosensitive member enlarges, which facilitates fixation of a friction-increasing substance to the surface of the photosensitive member.

In view of the foregoing, the present invention is directed to providing a charging member hardly causing a cleaning failure and a method of producing the charging member.

Further, the present invention is directed to providing an electrophotographic apparatus and a process cartridge capable of stably forming high-quality electrophotographic images.

Solution to Problem

According to one aspect of the present invention, there is provided a charging member, comprising: a support; an elastic layer; and a surface layer, wherein: the surface layer comprises a polymer compound having at least one bond selected from an Si-O-M bond and an Si-O-Ta bond, at least one bond selected from an M-O-Ge bond and a Ta-O-Ge bond, and an Si-O-Ge bond; the polymer compound has a structural unit represented by the following formula (1), a structural unit represented by the following formula (2), and at least one structural unit selected from a structural unit represented by the following formula (3) and a structural unit represented by the following formula (4); and the charging member has a crack extending from a surface thereof to the elastic layer, and the crack has a convexly raised edge by which a surface of the charging member is roughened, provided that M represent any element selected from the group consisting of Ti, Zr, and Hf:

Formula (1)

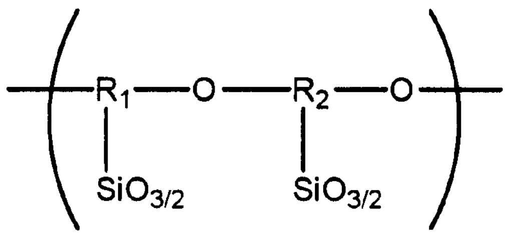

In the formula (1), $R_1$ and $R_2$ each independently represent any one of the following formulae (5) to (8):

Formula (5)

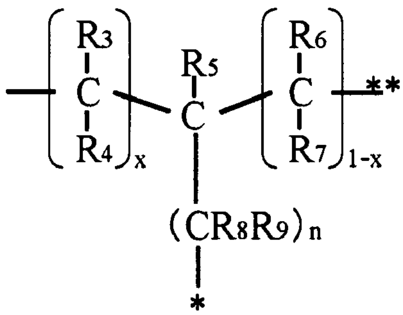

Formula (6)

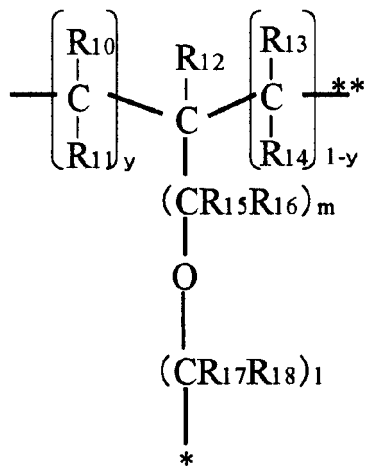

Formula (7)

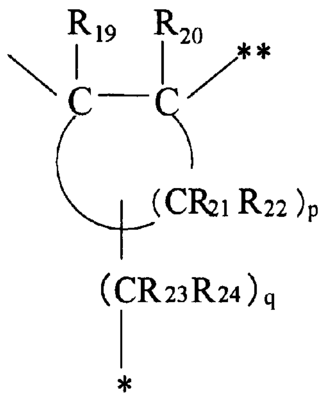

Formula (8)

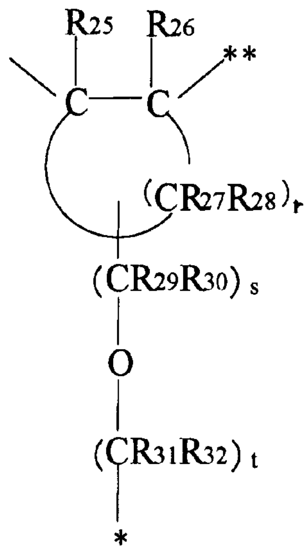

In the formulae (5) to (8), $R_3$ to $R_7$, $R_{10}$ to $R_{14}$, $R_{19}$, $R_{20}$, $R_{25}$, and $R_{26}$ each independently represent a hydrogen atom, an alkyl group having 1 or more and 4 or less carbon atoms, a hydroxyl group, a carboxyl group, or an amino

group, $R_2$, $R_9$, $R_{15}$ to $R_{18}$, $R_{23}$, $R_{24}$, and $R_{29}$ to $R_{32}$ each independently represent a hydrogen atom or an alkyl group having 1 or more and 4 or less carbon atoms, $R_{21}$, $R_{22}$, $R_{27}$, and $R_{28}$ each independently represent a hydrogen atom, an alkoxyl group having 1 or more and 4 or less carbon atoms, or an alkyl group having 1 or more and 4 or less carbon atoms, n, m, l, q, s, and t each independently represent an integer of 1 or more and 8 or less, p and r each independently represent an integer of 4 or more and 12 or less, x and y each independently represent 0 or 1, and * and ** represent sites to be bonded to a silicon atom and an oxygen atom in the formula (1), respectively:

Formula (2) $GeO_{4/2}$

Formula (3) $MO_{4/2}$

Formula (4) $TaO_{5/2}$

In the formula (3), M represents any element selected from the group consisting of Ti, Zr, and Hf.

According to another aspect of the present invention, there is provided a method of producing the above-described charging member, the method comprising the steps of: (i) forming, on an outer periphery of the elastic layer placed on an outer periphery of the support, a coating film of a coating agent containing a hydrolyzed condensate synthesized from the hydrolyzable compound represented by the formula (13), at least one of the hydrolyzable compounds represented by the formulae (14) to (17), and the hydrolyzable compound represented by the formula (18); and (ii) cleaving an epoxy group of the hydrolyzed condensate to crosslink the hydrolyzed condensate to produce the polymer compound, wherein in the step (ii), the coating film cures and shrinks to produce the surface layer having the crack.

Formula (13) $R_{33}\text{-Si}(OR_{34})(OR_{35})(OR_{36})$

Formula (14) $Ti(OR_{37})(OR_{38})(OR_{39})(OR_{40})$

Formula (15) $Zr(OR_{41})(OR_{42})(OR_{43})(OR_{44})$

Formula (16) $Hf(OR_{45})(OR_{46})(OR_{47})(OR_{48})$

Formula (17) $Ta(OR_{49})(OR_{50})(OR_{51})(OR_{52})(OR_{53})$

Formula (18) $Ge(OR_{54})(OR_{55})(OR_{56})(OR_{57})$

In the formula (13), $R_{33}$ represents any one of formulae (19) to (22) each having an epoxy group, and $R_{34}$ to $R_{36}$ each independently represent an alkyl group having 1 or more and 4 or less carbon atoms, and in the formulae (14) to (18), $R_{37}$ to $R_{57}$ each independently represent an alkyl group having 1 or more and 9 or less carbon atoms:

Formula (19)

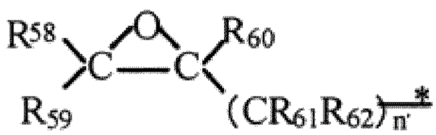

Formula (20)

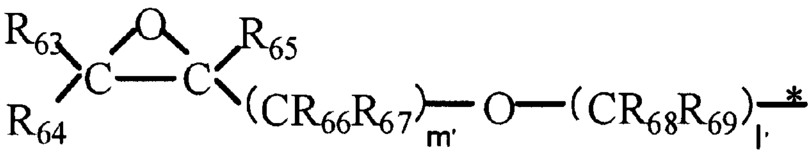

Formula (21)

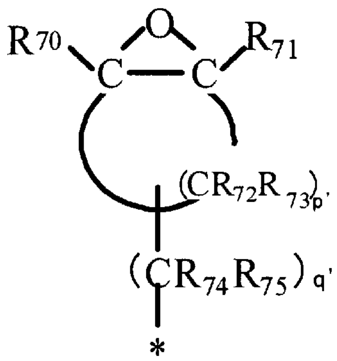

Formula (22)

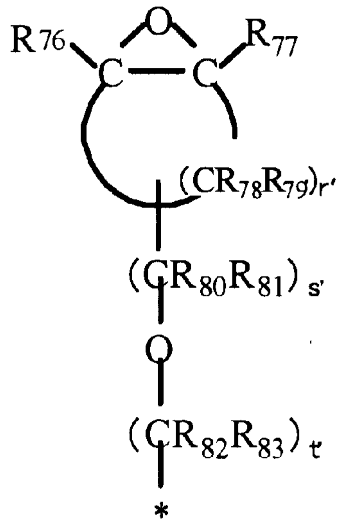

In the formulae (19) to (22), $R_{58}$ to $R_{60}$, $R_{63}$ to $R_{65}$, $R_{70}$, $R_{71}$ , $R_{76}$, and $R_{77}$ each independently represent a hydrogen atom, an alkyl group having 1 or more and 4 or less carbon atoms, a hydroxyl group, a carboxyl group, or an amino group, $R_{61}$, $R_{62}$, $R_{66}$ to $R_{69}$, $R_{74}$, $R_{75}$, and $R_{80}$ to $R_{83}$ each independently represent a hydrogen atom or an alkyl group having 1 or more and 4 or less carbon atoms, $R_{72}$, $R_{73}$, $R_{70}$, and $R_{79}$ each independently represent a hydrogen atom, an alkoxyl group having 1 or more and 4 or less carbon atoms, or an alkyl group having 1 or more and 4 or less carbon atoms, n', m', l', q', s', and t' each independently represent an integer of 1 or more and 8 or less, p' and r' each independently represent an integer of 4 or more and 12 or less, and * represents a site to be bonded to a silicon atom in the formula (13).

According to further aspect of the present invention, there is provided a method of producing the above-described charging member, the method comprising the steps of: (i) forming, on an outer periphery of the elastic layer placed on an outer periphery of the support, a coating film of a coating agent containing a hydrolyzed condensate synthesized from the hydrolyzable compound represented by the formula (13), the hydrolyzable compound represented by the formula (23), at least one of the hydrolyzable compounds represented by the formulae (14) to (17), and the hydrolyzable compound represented by the formula (18); and (ii) cleaving an epoxy group of the hydrolyzed condensate to crosslink the hydrolyzed condensate to produce the polymer compound, wherein in the step (ii), the coating film cures and shrinks to produce the surface layer having the crack:

Formula (23) $R_{84}$ - Si $(OR_{85})$ $(OR_{86})$ $(OR_{87})$

In the formula (23), $R_{84}$ represents an alkyl group or an aryl group, and $R_{85}$ to $R_{87}$ each independently represent

a hydrocarbon group.

According to still further aspect of the present invention, there is provided an electrophotographic apparatus, comprising: an electrophotographic photosensitive member; and the above-described charging member placed to be capable of charging the electrophotographic photosensitive member.

According to yet still further aspect of the present invention, there is provided a process cartridge, comprising an electrophotographic photosensitive member; and the above-described charging member for charging the electrophotographic photosensitive member, wherein the process cartridge is detachably mountable to a main body of an electrophotographic apparatus.

## Advantageous Effects of Invention

According to the present invention, there is provided the charging member hardly causing a cleaning failure.

In addition, according to the present invention, provided are the electrophotographic apparatus and the process cartridge capable of stably forming high-quality electrophotographic images.

## BRIEF DESCRIPTION OF THE DRAWINGS

FIG. 1 is a schematic sectional view illustrating the state of a crack in the surface of a charging member according to the present invention.

FIG. 2 is a schematic view illustrating an example of the construction of the charging member according to the present invention.

FIG. 3 is a schematic view illustrating an example of the construction of an electrophotographic apparatus according to the present invention.

FIG. 4 is a view illustrating an example of the sectional shape of a crack present in the surface of the charging member according to the present invention.

FIG. 5 is a graph illustrating an example of a relationship between the particle size distribution and elastic modulus of a material to be used in the surface layer of the charging member according to the present invention.

FIG. 6 shows an example of the spectrum by $^{29}$Si-NMR of a cured product of a condensate according to the present invention.

FIG. 7 shows an example of the spectrum by $^{13}$C-NMR of the cured product of the condensate according to the present invention.

## Description of Embodiments

### <Charging member>

A charging member according to the present invention has a support, an elastic layer formed on the outer periphery of the support, and a surface layer formed on the outer periphery of the elastic layer, and the surface of the charging member is roughened. That is, the charging member has a crack extending from its surface to the elastic layer, and the crack has a convexly raised edge by which a surface of the charging member is roughened.

FIG. 1 illustrates an example in which the surface of the charging member is roughened. As illustrated in FIG. 1, the charging member has a crack portion 104 extending from the surface of a surface layer 103 to an elastic layer 102, and such a shape that both the surface layer and the elastic layer protrude at an edge portion 105 of the crack portion is established. When the charging member abuts on a photosensitive member, the edge portion 105 serves as a point of contact with the photosensitive member and hence can reduce an area of contact with the photosensitive member. It is assumed from the foregoing that the charging member according to the present invention suppresses the press contact and fixation of a friction-increasing substance to the surface of the photosensitive member, thereby suppressing a vertical streak image.

The simplest construction of the charging member according to the present invention is such a construction that two layers, i.e., the elastic layer (electro-conductive elastic layer) and the surface layer are provided on the outer periphery of the support. One or two or more other layers may be provided between the support and the elastic layer or between the elastic layer and the surface layer. In FIG. 2 illustrating a section of a roller-shaped charging roller as a representative example of the charging member, the support is represented by reference numeral 101, the elastic layer is represented by reference numeral 102, and the surface layer is represented by reference numeral 103.

FIG. 4 illustrates an example of the surface profile of the charging member according to the present invention. As illustrated in FIG. 4, a crack is present in the surface of the charging member. The upper portion of FIG. 4 is a view

of the surface layer when viewed from above. The lower portion of FIG. 4 is a view illustrating the states of the irregularities of a section in a thickness direction at a position indicated by a broken line portion in the upper portion of FIG. 4. The thickness of the surface layer at this time is 2 μm. The observation of a crack profile shows that a crack measuring more than 2 μm occurs from the surface in the thickness direction and the crack develops as far as the elastic layer.

(Support)

The support of the charging member has only to have electro-conductivity (electro-conductive support), and for example, a support made of a metal (alloy) such as iron, copper, stainless steel, aluminum, an aluminum alloy, or nickel can be used. In addition, the surface of such support may be subjected to a surface treatment such as a plating treatment for the purpose of imparting scratch resistance to such an extent that its electro-conductivity is not impaired.

(Elastic layer)

One kind or two or more kinds of elastomers such as rubbers used in the elastic layers (electro-conductive elastic layers) of the conventional charging members can be used for forming the elastic layer. Examples of the rubbers include a urethane rubber, a silicone rubber, a butadiene rubber, an isoprene rubber, a chloroprene rubber, a styrene-butadiene rubber, an ethylene-propylene rubber, a polynorbornene rubber, an acrylonitrile rubber, an epichlorohydrin rubber, and an alkyl ether rubber.

In addition, the electro-conductivity of the elastic layer can be set to a predetermined value by appropriately using an electro-conductive agent. The electrical resistance value of the elastic layer can be adjusted by appropriately selecting the kind and usage of the electro-conductive agent, and the electrical resistance value falls within the range of suitably $10^2$ to $10^8$ Q, more suitably $10^3$ to $10^6$ Ω.

In addition, as the electro-conductive agent for the elastic layer, electro-conductive carbons such as ketjen black EC, acetylene black, carbon for rubber, carbon for (color) ink subjected to oxidation treatment, and pyrolytic carbon may each be used. Examples of the carbon for rubber include: Super Abrasion Furnace (SAF: super abrasion resistance), Intermediate Super Abrasion Furnace (ISAF: intermediate super abrasion resistance), High Abrasion Furnace (HAF: high abrasion resistance), Fast Extruding Furnace (FEF: good extrusion property), General Purpose Furnace (GPF: general purpose property), Semi Reinforcing Furnace (SRF: semi-reinforcing property), Fine Thermal (FT: fine particle thermal decomposition), and Medium Thermal (MT: medium particle thermal decomposition).

In addition, graphites such as natural graphite and artificial graphite may each be used as the electro-conductive agent for the elastic layer.

An inorganic or organic filler, or a crosslinking agent may be added to the elastic layer. Examples of the filler include silica (white carbon), calcium carbonate, magnesium carbonate, clay, talc, zeolite, alumina, barium sulfate, and aluminum sulfate. Examples of the crosslinking agent include sulfur, a peroxide, a crosslinking aid, a crosslinking accelerator, a crosslinking supplement accelerator, and a crosslinking retarder.

The MD-1 hardness of the elastic layer is preferably 50° or more and 85° or less, particularly preferably 60° or more and 80° or less from the viewpoint of suppressing the deformation of the charging member when the charging member and the photosensitive member as a body to be charged are brought into abutment with each other. As long as the MD-1 hardness falls within the range, a crack depth of the elastic layer can be controlled in an additionally easy fashion by utilizing the curing and shrinkage of a coating film for the surface layer. In addition, when the MD-1 hardness exceeds 85°, an abutting pressure when the charging member and the photosensitive member are brought into abutment with each other is so high that the fixation of toner, an external additive, or the like due to its pressing against the photosensitive member is apt to occur during long-term use of the charging member.

The surface roughness (Rz) of the elastic layer also has an influence upon formation of a crack through the curing and shrinkage of the coating film for the surface layer. The control of the surface roughness is achieved through a polishing step. In addition, the surface roughness can be controlled in accordance with the hardness of the elastic layer as described above. Alternatively, the surface roughness can be controlled depending on polishing conditions (such as the number of rotations of a grindstone, the number of rotations of a work, a cutting speed, and a grinding time) and the kind of the grindstone. In general, when elastic layers are polished under the same conditions, the elastic layer having the smaller MD-1 hardness tends to show the larger Rz, and in contrast, the elastic layer having the larger MD-1 hardness tends to show the smaller Rz.

The surface roughness Rz is preferably 3.0 μm or more and 12.0 μm or less, more preferably 5.0 μm or more and 10.0 μm or less. Setting the surface roughness Rz within the range enables additionally stable formation of a crack through the curing and shrinkage of the coating film for the surface layer.

The elastic layer is formed on the outer periphery of the support from the elastomer raw materials, which have been mixed with a closed mixer or the like, by a known method such as extrusion molding, injection molding, and compression molding. It should be noted that the elastic layer is bonded to the outer periphery of the support through

an adhesive as required. The elastic layer thus formed is subjected to a vulcanization treatment as required. When a vulcanizing temperature is rapidly increased, a volatile by-product such as a vulcanization accelerator caused by a vulcanization reaction gasifies to be responsible for a void. Therefore, the following is preferably adopted. A heating zone is divided into two zones. A gas component is sufficiently removed by keeping a first zone in such a state that the temperature in the zone is lower than the vulcanizing temperature. After that, vulcanization is performed in a second zone.

(Surface layer)

The surface layer contains a polymer compound having at least one bond of an Si-O-M bond and an Si-O-Ta bond, at least one bond of an M-O-Ge bond and a Ta-O-Ge bond, and an Si-O-Ge bond.

In addition, the polymer compound has structural units represented by the formula (1) and formula (2), and at least one structural unit of structural units represented by a formula (3) and a formula (4). It should be noted that M represents any element selected from the group consisting of Ti, Zr, and Hf.

Formula (1)

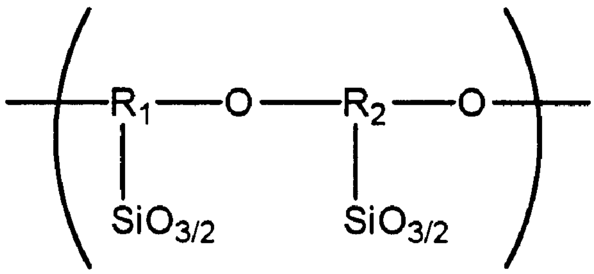

In the formula (1), $R_1$ and $R_2$ each independently represent any one of the following formulae (5) to (8).

Formula (5)

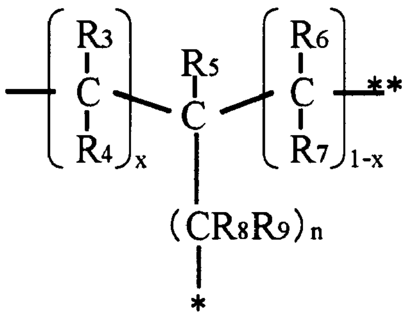

Formula (6)

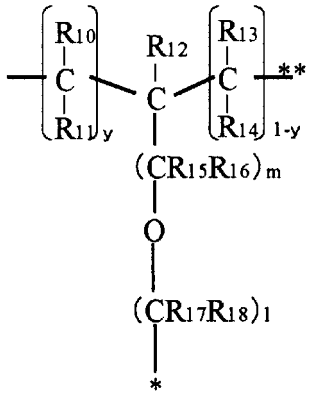

Formula (7)

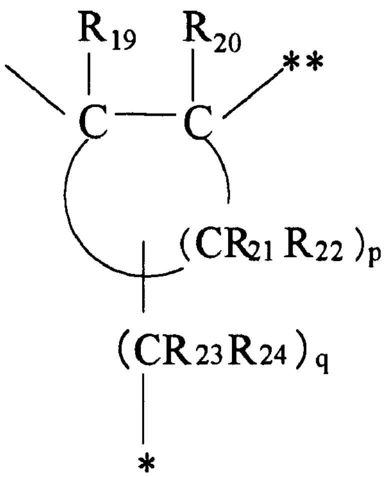

Formula (8)

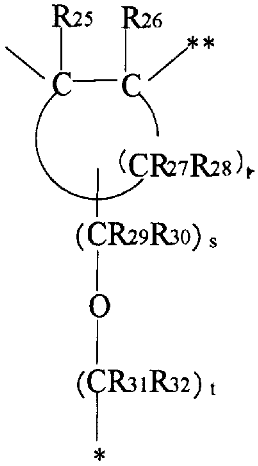

In the formulae (5) to (8), $R_3$ to $R_7$, $R_{10}$ to $R_{14}$, $R_{19}$, $R_{20}$, $R_{25}$, and $R_{26}$ each independently represent a hydrogen atom, an alkyl group having 1 or more and 4 or less carbon atoms, a hydroxyl group, a carboxyl group, or an amino

group, $R_8$, $R_9$, $R_{15}$ to $R_{18}$, $R_{23}$, $R_{24}$, and $R_{29}$ to $R_{32}$ each independently represent a hydrogen atom or an alkyl group having 1 or more and 4 or less carbon atoms, $R_{21}$, $R_{22}$, $R_{27}$, and $R_{28}$ each independently represent a hydrogen atom, an alkoxyl group having 1 or more and 4 or less carbon atoms, or an alkyl group having 1 or more and 4 or less carbon atoms, n, m, l, q, s, and t each independently represent an integer of 1 or more and 8 or less, p and r each independently represent an integer of 4 or more and 12 or less, x and y each independently represent 0 or 1, and * and ** represent sites to be bonded to a silicon atom and an oxygen atom in the formula (1), respectively.

Formula (2) $GeO_{4/2}$

Formula (3) $MO_{4/2}$

Formula (4) $TaO_{5/2}$

In the formula (3), M represents any element selected from the group consisting of Ti, Zr, and Hf.

In the polymer compound, it is preferred that $R_1$ and $R_2$ in the formula (1) each represent any one of the following formulae (9) to (12). In this case, the presence of an organic chain allows the elastic modulus of the surface layer to be controlled. In addition, it is preferred the organic chain have an ether moiety in its structure because the adhesiveness with the elastic layer is enhanced.

Formula (9)

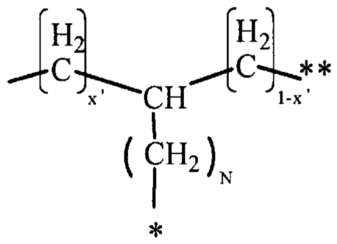

Formula (10)

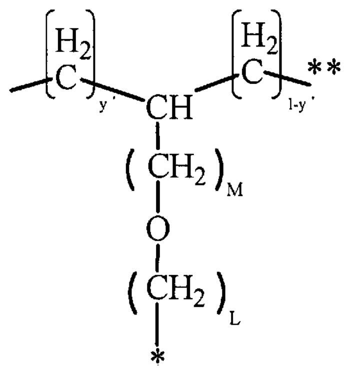

Formula (11)

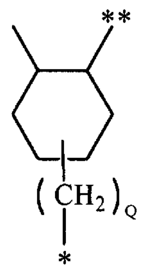

Formula (12)

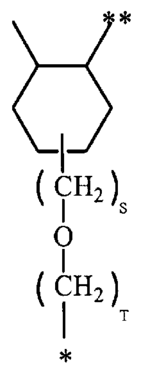

In the formulae (9) to (12), N, M, L, Q, S, and T each independently represent an integer of 1 or more and 8 or less, x' and y' each independently represent 0 or 1, and * and ** represent sites to be bonded to a silicon atom and an oxygen atom in the formula (1), respectively.

The ratio "(M+Ta+Ge)/Si" of a total sum of the numbers of M, Ta, and Ge atoms to the number of silicon atoms in the polymer compound is preferably 0.10 or more and 12.50 or less, more preferably 0.50 or more and 10.00 or less. As long as the ratio is 0.10 or more and 12.50 or less, the surface layer can be made highly elastic. In addition, a balance between an increase in elastic modulus of the surface layer and its flexibility can be established by adjusting the ratio of the number of M or Ta and Ge atoms in the range. When the percentage of M or Ta is increased, the surface layer has a high elastic modulus and hence the area of contact with the photosensitive member can be additionally reduced. Further, the incorporation of Ge improves its toughness. Accordingly, a reduction in strength of the surface layer resulting from a stress applied to the layer by the repetition of the abutment with the photosensitive member and rotation is suppressed, and hence the area of contact with the photosensitive member can be controlled even during the long-term use.

It is preferred that the polymer compound include a crosslinked product of a hydrolyzable compound having a structure represented by a formula (13), at least one of hydrolyzable compounds having structures represented by formulae (14) to (17), and a hydrolyzable compound represented by a formula (18). Such crosslinked product is such that a crack can be caused in the surface layer by the curing and shrinkage of the crosslinked product at the time of its production. In addition, the material composition of the surface of the charging member can be constituted of a single system free of any filler or particle. Further, the thickness of the surface layer can be reduced.

Formula (13) $R_{33}$-Si $(OR_{34})$ $(OR_{35})$ $(OR_{36})$

Formula (14) Ti $(OR_{37})$ $(OR_{38})$ $(OR_{39})$ $(OR_{40})$

Formula (15) Z r $(OR_{41})$ $(OR_{42})$ $(OR_{43})$ $(OR_{44})$

Formula (16) H f $(OR_{45})$ $(OR_{46})$ $(OR_{47})$ $(OR_{48})$

Formula (17) Ta $(OR_{49})$ $(OR_{50})$ $(OR_{51})$ $(OR_{52})$ $(OR_{53})$

Formula (18) $Ge(OR_{54})(OR_{55})(OR_{56})(OR_{57})$

In the formula (13), $R_{33}$ represents any one of formulae (19) to (22) each having an epoxy group, and $R_{34}$ to $R_{36}$ each independently represent an alkyl group having 1 or more and 4 or less carbon atoms, and in the formulae (14) to (18), $R_{37}$ to $R_{57}$ each independently represent an alkyl group having 1 or more and 9 or less carbon atoms.

Formula (19)

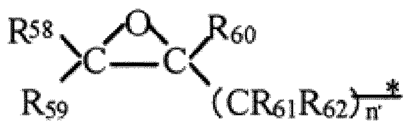

Formula (20)

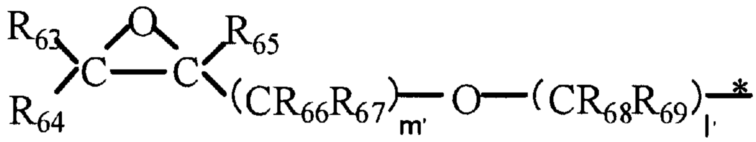

Formula (21)

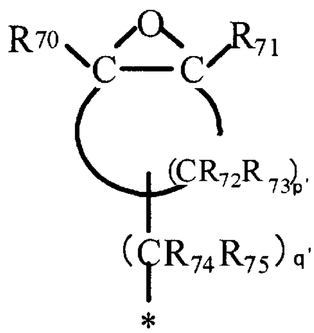

Formula (22)

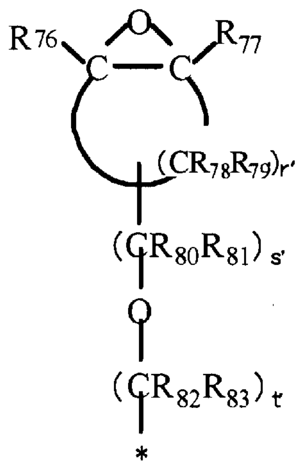

In the formulae (19) to (22), $R_{58}$ to $R_{60}$, $R_{63}$ to $R_{65}$, $R_{70}$, $R_{71}$, $R_{76}$, and $R_{77}$ each independently represent a hydrogen atom, an alkyl group having 1 or more and 4 or less carbon atoms, a hydroxyl group, a carboxyl group, or an

amino group, $R_{61}$, $R_{62}$, $R_{66}$ to $R_{69}$, $R_{74}$, $R_{75}$, and $R_{80}$ to $R_{83}$ each independently represent a hydrogen atom or an alkyl group having 1 or more and 4 or less carbon atoms, $R_{72}$, $R_{73}$, $R_{78}$, and $R_{79}$ each independently represent a hydrogen atom, an alkoxyl group having 1 or more and 4 or less carbon atoms, or an alkyl group having 1 or more and 4 or less carbon atoms, n', m', l', q', s', and t' each independently represent an integer of 1 or more and 8 or less, p' and r' each independently represent an integer of 4 or more and 12 or less, and * represents a site to be bonded to a silicon atom in the formula (13).

A hydrolyzable titanium compound having a structure represented by the formula (14) is specifically exemplified below: titanium methoxide, titanium ethoxide, titanium n-propoxide, titanium i-propoxide, titanium n-butoxide, titanium t-butoxide, titanium i-butoxide, titanium n-nonyloxide, and titanium 2-ethylhexoxide.

A hydrolyzable zirconium compound having a structure represented by the formula (15) is specifically exemplified below: zirconium methoxide, zirconium ethoxide, zirconium n-propoxide, zirconium i-propoxide, zirconium n-butoxide, zirconium t-butoxide, and zirconium 2-ethylhexoxide.

A hydrolyzable hafnium compound having a structure represented by the formula (16) is specifically exemplified below: hafnium methoxide, hafnium ethoxide, hafnium n-propoxide, hafnium i-propoxide, hafnium n-butoxide, hafnium t-butoxide, and hafnium 2-ethylhexoxide.

A hydrolyzable tantalum compound having a structure represented by the formula (17) is specifically exemplified below: tantalum methoxide, tantalum ethoxide, tantalum n-propoxide, tantalum i-propoxide, tantalum n-butoxide, tantalum t-butoxide, and tantalum 2-ethylhexoxide.

A hydrolyzable germanium compound having a structure represented by the formula (18) is specifically exemplified below: germanium methoxide, germanium ethoxide, germanium i-propoxide, and germanium n-butoxide.

A hydrolyzable silane compound having a structure represented by the formula (19) is specifically exemplified below: 4-(1,2-epoxybutyl)trimethoxysilane, 4-(1,2-epoxybutyl)triethoxysilane, 5,6-epoxyhexyltrimethoxysilane, 5,6-epoxyhexyltriethoxysilane, 8-oxiran-2-yloctyltrimethoxysilane, and 8-oxiran-2-yloctyltriethoxysilane.

A hydrolyzable silane compound having a structure represented by the general formula (20) is specifically exemplified below: glycidoxypropyltrimethoxysilane and glycidoxypropyltriethoxysilane.

A hydrolyzable silane compound having a structure represented by the general formula (21) is specifically exemplified below: 2-(3,4-epoxycyclohexyl)ethyltrimethoxysilane and 2-(3,4-epoxycyclohexyl)ethyltriethoxysilane.

A hydrolyzable silane compound having a structure represented by the general formula (22) is specifically exemplified below: 3-(3,4-epoxycyclohexyl)methyloxypropyltrimethoxysilane and 3-(3,4-epoxycyclohexyl)methyloxypropyltriethoxysilane.

Further, it is preferred that the polymer compound include a crosslinked product of the hydrolyzable compound having a structure represented by the formula (13), at least one of the hydrolyzable compounds having structures represented by the formulae (14) to (17), the hydrolyzable compound represented by the formula (18), and a hydrolyzable compound having a structure represented by the following formula (23).

Formula (23) $R_{84}\text{-Si}\ (OR_{85})\ (OR_{86})\ (OR_{87})$

In the formula (23), $R_{84}$ represents an alkyl group or an aryl group, and $R_{85}$ to $R_{87}$ each independently represent a hydrocarbon group.

A hydrolyzable silane compound having a structure represented by the formula (23) is specifically exemplified below: methyltrimethoxysilane, methyltriethoxysilane, methyltripropoxysilane, ethyltrimethoxysilane, ethyltriethoxysilane, ethyltripropoxysilane, propyltrimethoxysilane, propyltriethoxysilane, propyltripropoxysilane, hexyltrimethoxysilane, hexyltriethoxysilane, hexyltripropoxysilane, decyltrimethoxysilane, decyltriethoxysilane, decyltripropoxysilane, phenyltrimethoxysilane, phenyltriethoxysilane, and phenyltripropoxysilane.

When the hydrolyzable silane compound having a structure represented by the formula (23) is used in combination, a hydrolyzable silane compound in which $R_{84}$ represents a linear alkyl group having 6 or more and 10 or less carbon atoms and a hydrolyzable silane compound in which $R_{84}$ represents a phenyl group are preferably combined. In this case, compatibility with a solvent is good even when a monomer structure changes owing to a hydrolysis and condensation reaction.

The metal element M represents any element selected from the group consisting of Ti, Zr, and Hf. Comparison between the kind of metal atom of a metal alkoxide and the extent to which the surface of the charging member is roughened has shown that the extent tends to enlarge in the following order: Ti<Zr<Hf<Ta. In addition, comparison between the kind of metal atom of the metal alkoxide and the elastic modulus of the surface layer has shown that the elastic modulus tends to increase in the following order: Ti<Zr<Hf<Ta. Although the reasons for the foregoing have not been elucidated yet, a difference in reaction rate between the metal alkoxides or the valence of a metal atom is assumed to reflect the tendencies. For example, comparison of fine particles formed of hydrolyzed condensates of the respective metal alkoxides and an Si alkoxide, and their film physical properties has shown that as illustrated in FIG. 5, the sizes of fine particles to be produced during synthesis vary depending on metal species, and tend to increase in the following

order: Hf<Ta<Zr<Ti.

This is assumed to be because the sizes of fine particles determine the denseness of the film (surface layer) during a curing process for the coating film, and the denseness directly affects the elastic modulus of the film. In other words, the following is conceivable. As the film becomes denser, the extent to which the coating film cures and shrinks enlarges, and whether the extent is large or small directly represents an influence on surface cracking, in other words, the curing and shrinkage, thereby affecting the manner in which the edge portion of a crack protrudes outwardly.

In addition, Ta fine particles are prepared from a pentavalent alkoxide, and hence the number of reactive sites of the curing and shrinkage is larger than those of the tetravalent alkoxides of Ti, Zr, and Hf. Accordingly, it is conceivable that the denseness of the film is high and hence the elastic modulus increases. Meanwhile, Ge fine particles have larger sizes than those of the fine particles of Ti and the like, and hence may impart moderate flexibility to the surface layer.

Accordingly, the surface layer obtained by the curing and shrinkage of the coating film containing at least one kind of the Ti, Zr, Hf, and Ta fine particles, and the Ge fine particles roughens the surface of the charging member, and suppresses a reduction in its strength resulting from a stress applied to the layer by the repetition of the abutment with the photosensitive member, and rotation. It is conceivable that the area of contact with the photosensitive member can be controlled even during the long-term use as a result of the foregoing.

The thickness of the surface layer is preferably 0.10 to 2.50 μm, particularly preferably 0.15 to 2.00 μm from the viewpoints of suppressing the bleedout of a low-molecular weight component from the elastic layer and accelerating the roughening of the surface resulting from a crack in the surface layer.

The charging member of the present invention has a crack extending from its surface to the elastic layer, the crack being produced by the curing and shrinkage of the coating film, and the edge portion of the crack protrudes outwardly to roughen the surface of the charging member.

The surface roughnesses Rz and Ry of the charging member are values reflecting the size of a crack. The surface roughness Rz of the charging member is preferably 5 μm or more and 25 μm or less from the viewpoint of achieving compatibility between suppressing the fixation to the surface of the photosensitive member due to the charging member and uniform charging of the photosensitive member. The surface roughness is more preferably 7 μm or more and 22 μm or less, still more preferably 10 μm or more and 20 μm or less.

In addition, a cationic polymerization initiator as a photopolymerization initiator is preferably caused to coexist from the viewpoint of an improvement in crosslinking efficiency during the crosslinking reaction. For example, an epoxy group shows high reactivity for an onium salt of a Lewis acid activated with an active energy ray. Accordingly, when the cationically polymerizable group is an epoxy group, the onium salt of the Lewis acid is preferably used as the cationic polymerization initiator.

Other examples of the cationic polymerization initiator include a borate, a compound having an imide structure, a compound having a triazine structure, an azo compound, and a peroxide.

Of various kinds of cationic polymerization initiators, an aromatic sulfonium salt and an aromatic iodonium salt are preferred from the viewpoints of sensitivity, stability, and reactivity. A bis(4-tert-butylphenyl)iodonium salt, a compound having a structure represented by the following chemical formula (24) (trade name: Adekaoptomer SP150, manufactured by ADEKA CORPORATION), or a compound having a structure represented by the following chemical formula (25) (trade name: IRGACURE 261, manufactured by Ciba Specialty Chemicals Inc.) is particularly preferred.

Formula (24)

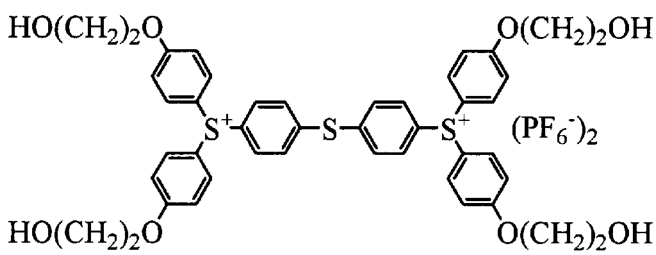

Formula (25)

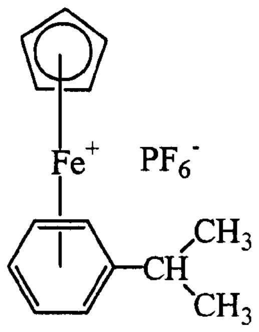

In addition, the cationic polymerization initiator as a photopolymerization initiator is preferably added in an amount of 1.0 to 3.0 parts by mass with respect to 100 parts by mass of the hydrolyzed condensate. As long as the addition amount falls within the range, curing characteristics and the solubility of the photopolymerization initiator are good.

(Method of producing charging member)

Examples of a method of producing the charging member of the present invention are given below. A production method example 1 for the charging member of the present invention is a production method involving using the compound represented by the formula (13), at least one of the compounds represented by the formulae (14) to (17), and the compound represented by the formula (18). In addition, a production method example 2 for the charging member of the present invention is a production method involving using the compound represented by the formula (13), the compound represented by the formula (23), at least one of the compounds represented by the formulae (14) to (17), and the compound represented by the formula (18).

The production method example 1 includes the steps of: (i) forming, on the outer periphery of the elastic layer placed on the outer periphery of the support, a coating film of a coating agent containing a hydrolyzed condensate synthesized from the hydrolyzable compound represented by the formula (13), at least one of the hydrolyzable compounds represented by the formulae (14) to (17), and the hydrolyzable compound represented by the formula (18); and (ii) cleaving an epoxy group of the hydrolyzed condensate to crosslink the hydrolyzed condensate to produce the polymer compound. In the step (ii), the coating film cures and shrinks to produce the surface layer having a crack. It should be noted that in the case of the production method example 2, a mixture of the hydrolyzable compounds represented by the general formulae (13) and (23) is used instead of the hydrolyzable compound represented by the general formula (13) in the step (i).

In the step (i), a condensate intermediate is obtained by: adding water and an alcohol to the hydrolyzable silane compound; and performing hydrolysis and condensation through reflux under heating (first-stage reaction). The final condensate is obtained by: adding at least one of the hydrolyzable compounds having structures represented by the formulae (14) to (17), and the hydrolyzable compound represented by the formula (18) to the resultant condensate intermediate (liquid); and performing hydrolysis and condensation (second-stage reaction).

It is because of the following reason that the two-stage synthesis reaction is performed as described above. The reaction rate of the hydrolyzable compound represented by the formula (13) or of the combination of the hydrolyzable compounds represented by the formula (13) and the formula (23), and the reaction rate of the hydrolyzable compound represented by any one of the formulae (14) to (18) are different from each other. The reaction rate of the compound represented by any one of the formulae (14) to (18) is extremely high. As long as the ratio "(M+Ta+Ge)/Si" is about 0.10 to 0.30, the hydrolysis and condensation reaction smoothly progresses even when the reaction is not divided into two stages. However, when the ratio "(M+Ta+Ge)/Si" exceeds 0.30, only the hydrolyzable compound represented by any one of the formulae (14) to (18) selectively reacts owing to the difference in reaction rate, and hence opacification and precipitation are apt to occur. Accordingly, the two-stage synthesis reaction is preferably performed as described above.

Next, the photopolymerization initiator is added to the condensate (liquid) obtained by the two-stage reaction. After that, the step (ii) is performed. Thus, the surface layer according to the present invention can be formed.

In the step (i), a ratio WR (molar ratio) of the addition amount of water with respect to the hydrolyzable silane compound upon preparation of the condensate intermediate is preferably 0.3 or more and 6.0 or less.

(Mathematical equation 1)

WR=water/{hydrolyzable compound (13)+hydrolyzable compound (23)}

The value for the WR is more preferably 1.2 or more and 3.0 or less. As long as the addition amount of water falls within the range, the extent of the condensation at the time of the synthesis can be easily controlled. The rate of the condensation can also be easily controlled, which is effective in stabilizing the life of the coating agent.

In addition, a primary alcohol alone, a mixture of a primary alcohol and a secondary alcohol, or a mixture of a primary alcohol and a tertiary alcohol is preferably used as the alcohol for preparing a paint for forming the surface layer. Ethanol, a combination of methanol/2-butanol, or a combination of ethanol/2-butanol is particularly preferred.

Next, the viscosity of the resultant paint for forming the surface layer is adjusted to a proper one, and then the paint is applied to the outer periphery of the member having the elastic layer formed on the outer periphery of the support. Upon preparation of the paint for forming the surface layer, a proper solvent whose volatility has been taken into consideration as well as the solvent used in the synthesis may be used for improving its coating property. Examples of the proper solvent include 2-butanol, ethyl acetate, methyl ethyl ketone, and a mixture thereof.

In addition, upon application of the paint for forming the surface layer onto the elastic layer, application with a roll coater, dip coating, ring application, or the like can be adopted. In particular, in the case of the ring application, the paint can be applied within a short time period, and the thickness uniformity of the surface layer in each of its circumferential direction and lengthwise direction is high. In addition, the usage of the paint for forming the surface layer can be reduced. Accordingly, the ring application is preferred from the viewpoint of the alleviation of an environmental load.

Next, a cationically polymerizable group in the coating film of the paint for forming the surface layer applied onto the elastic layer, e.g., an epoxy group is cleaved by irradiating the coating film with an active energy ray. Thus, the condensates in the coating film crosslink with each other to cure the coating film. Thus, the surface layer according to the present invention is formed.

UV light is preferably used as the active energy ray. When the crosslinking reaction is performed with UV light, the deterioration of the elastic layer due to thermal hysteresis can be suppressed and hence reductions in electrical characteristics of the elastic layer can be suppressed.

For the irradiation with UV light, a high-pressure mercury lamp, a metal halide lamp, a low-pressure mercury lamp, an excimer UV lamp, or the like can be used. Of those, a UV light source rich in UV light having a wavelength of 150 to 480 nm is preferably used. It should be noted that the integral light quantity of UV light is defined as follows.

$$\text{UV integral light quantity (mJ/cm}^2\text{)} = \text{UV light intensity (mW/cm}^2\text{)} \times \text{irradiation time (s)}$$

The UV integral light quantity can be adjusted depending on the irradiation time, a lamp output, and a distance between the lamp and an object to be irradiated. In addition, the integral light quantity may be provided with a gradient within the irradiation time.

When a low-pressure mercury lamp is used, the integral light quantity of UV light can be measured with a UV integral actinometer "UIT-150-A" or "UVD-S254" manufactured by USHIO INC. When an excimer UV lamp is used, the integral light quantity of UV light can be measured with a UV integral actinometer "UIT-150-A" or "VUV-S172" manufactured by USHIO INC.

<Electrophotographic apparatus and process cartridge>

FIG. 3 illustrates an example of the schematic construction of an electrophotographic apparatus including a process cartridge having the charging member of the present invention. The electrophotographic apparatus has a cylindrical photosensitive member 1 to be rotationally driven around an axis 2 in the direction indicated by an arrow at a predetermined circumferential speed. The photosensitive member to be rotationally driven may have a support, and a photosensitive layer, a charge-injecting layer, a surface layer, formed on the support.

The surface of the photosensitive member to be rotationally driven is uniformly charged to a positive or negative predetermined potential by a charging member 3. Next, the surface receives exposure light (image exposure light) 4 output from exposing unit (not shown) such as slit exposure and laser beam scanning exposure so that electrostatic latent images corresponding to a target image may be formed.

Upon charging of the surface of the photosensitive member by the charging member, a DC voltage or a voltage obtained by superimposing an AC voltage on a DC voltage is applied to the charging member from voltage-applying unit (not shown).

The electrostatic latent images formed on the surface of the photosensitive member are each supplied with a developer from a developing roller provided for developing unit 5, and are then subjected to reversal development or regular development so as to turn into toner images. Next, the toner images on the surface of the photosensitive member are sequentially transferred by a transfer bias applied to a transfer roller 6 onto a transfer material P such as paper conveyed to a gap between the photosensitive member and the transfer roller in synchronization with the rotation of the photosensitive member. The toner images which have been transferred onto the transfer material P are fixed onto the transfer material P by fixing unit 8. In addition, a transfer residual developer (toner) on the surface of the photosensitive member after the transfer of the toner images onto the transfer material P is removed by cleaning unit 7 such as a cleaning blade so that the surface may be cleaned. Further, the surface is subjected to an antistatic treatment by pre-exposure light from pre-exposing unit, and is then repeatedly used for image formation. When the charging unit is contact charging unit, the pre-exposure light is not indispensable.

The photosensitive member, the charging member, the developing unit, and the cleaning unit are integrated to form a process cartridge 9, which is detachably mountable to the main body of the electrophotographic apparatus with guiding unit 10 such as a rail of the main body of the electrophotographic apparatus. A cartridge formed of unit appropriately selected from transferring unit in addition to the above-mentioned members can also be detachably mountable to the main body of the electrophotographic apparatus.

Examples

Hereinafter, the present invention is described in more detail by way of examples.

(1) Formation and evaluations of electro-conductive elastic roller

(Production of electro-conductive elastic roller-1)

Amounts shown in Table 1 of components (1) were kneaded in a 6-L kneader for 20 minutes. Next, amounts shown in Table 1 of components (2) were added to the mixture, and then the whole was kneaded with an open roll for an additional eight minutes. Thus, an unvulcanized rubber composition was obtained.

Table 1

| | Material | Part(s) by mass |
|---|---|---|
| Components (1) | NBR (trade name: N230SV, manufactured by JSR Corporation) | 100 |
| | Zinc oxide | 5 |
| | Zinc stearate | 1 |
| | Calcium carbonate (trade name: NANOX #30, manufactured by MARUO CALCIUM CO., LTD.) | 20 |
| | Carbon black (trade name: TOKABLACK #7360SB, manufactured by TOKAI CARBON CO., LTD.) | 46 |
| Components (2) | Tetrabenzylthiuram disulfide (trade name: Sanceler TBzTD, manufactured by SANSHIN CHEMICAL INDUSTRY CO., LTD.) | 4.5 |
| | Sulfur | 1.2 |
| Components (3) | NBR (trade name: N230SV, manufactured by JSR Corporation) | 100 |
| | Zinc oxide | 5 |
| | Zinc stearate | 1 |
| | Calcium carbonate (trade name: NANOX #30, manufactured by MARUO CALCIUM CO., LTD.) | 20 |
| | Carbon black (trade name: Raven #1170, manufactured by Columbian Carbon) | 25 |

(continued)

| | Material | Part(s) by mass |
|---|---|---|
| Components (4) | Epichlorohydrin rubber (trade name: EPION, manufactured by DAISO CO., LTD.) | 100 |
| | Zinc oxide | 5 |
| | Zinc stearate | 1 |
| | Calcium carbonate (trade name: NANOX #30, manufactured by MARUO CALCIUM CO., LTD.) | 65 |
| | Quaternary ammonium salt (trade name: LV70, manufactured by ADEKA CORPORATION) | 2 |

Next, a thermosetting adhesive containing a metal and a rubber (trade name: METALOC N-33, manufactured by TOYO KAGAKU KENKYUSHO CO., LTD.) was applied to a region extending by up to 115.5 mm on both sides each with respect to the center in the axial direction of the columnar surface of a columnar support made of steel having a diameter of 6 mm and a length of 252 mm (having a nickel-plated surface) (region having a total width in the axial direction of 231 mm). The resultant was dried at 80°C for 30 minutes, and was then further dried at 120°C for 1 hour.

Next, the unvulcanized rubber composition was coaxially extruded into a cylindrical shape having an outer diameter of 8.75 to 8.90 mm with a crosshead extruder onto the support with an adhesive layer, and then its ends were cut. Thus, a layer (length: 252 mm) of the unvulcanized rubber composition was formed on the outer periphery of the support was produced. An extruder having a cylinder diameter of 70 mm and an L/D of 20 was used as the extruder. With regard to temperature conditions at the time of the extrusion, the temperature of a head was set to 90°C, the temperature of the cylinder was set to 90°C, and the temperature of a screw was set to 90°C.

Next, the layer of the unvulcanized rubber composition was vulcanized with a continuous heating furnace having two zones set to different temperatures. The layer was passed through a first zone whose temperature had been set to 80°C in 30 minutes, and was then passed through a second zone whose temperature had been set to 160°C in 30 minutes. Thus, an elastic layer was obtained.

Next, both ends of the elastic layer were cut so that the elastic layer had a width in an axial direction of 232 mm. After that, the surface of the portion of the elastic layer was ground with a rotary grindstone. Thus, an electro-conductive elastic roller-1 having a crown shape having a diameter at each end of 8.26 mm and a diameter at the central portion of 8.5 mm was obtained.

(Evaluation 1: Evaluation of electro-conductive elastic roller)

The surface of the electro-conductive elastic roller-1 was evaluated for its ten-point average roughness (Rz), maximum height (Ry), and hardness (MD-1). Table 2 shows the results. The ten-point average roughness (Rz) and the maximum height (Ry) were measured in conformity with JIS B0601 (1994). The following conditions were adopted for the measurement: an evaluation length of 8.0 mm, a cutoff value of 0.8 mm, a feed speed of 0.5 mm/s, and a filter characteristic of 2CR.

(Production of electro-conductive elastic rollers-2 and 3)

Elastic rollers-2 and 3 were produced in the same manner as in the electro-conductive elastic roller-1 except that the conditions under which the elastic layer was polished were changed so that the Rz and the Ry took values shown in Table 2. The resultant electro-conductive elastic rollers were subjected to Evaluation (1). Thus, it was confirmed that the Rz and the Ry took predetermined values.

(Production of electro-conductive elastic roller-4)

An electro-conductive elastic roller-4 was produced in the same manner as in the electro-conductive elastic roller-1 except that the components (1) shown in Table 1 were changed to the components (3) shown in Table 1, and then the roller was subjected to Evaluation (1).

(Production of electro-conductive elastic roller-5)

An electro-conductive elastic roller-5 was produced in the same manner as in the electro-conductive elastic roller-1 except that the components (1) shown in Table 1 were changed to the components (4) shown in Table 1, and then the roller was subjected to Evaluation (1).

Table 2 shows the results of Evaluation (1) of the electro-conductive elastic rollers-1 to 5.

Table 2

| Electro-conductive elastic roller No. | MD-1 [°] | Rz [μm] | Ry [μm] |
|---|---|---|---|
| 1 | 73 | 6.1 | 8.4 |
| 2 | | 4.2 | 6.2 |
| 3 | | 8.1 | 12.1 |
| 4 | 62 | 5.9 | 7.9 |
| 5 | 50 | 5.6 | 7.5 |

(Example 1)

<Preparation of condensate intermediate-1>

(First-stage reaction)

Table 6 shows the list of raw materials used in the synthesis of a condensate. 11.56 Grams (0.049 mol) of 3-glycidoxypropyltrimethoxysilane (EP-1) (trade name: KBM-403, manufactured by Shin-Etsu Chemical Co., Ltd.) and 62.11 g (0.301 mol) of hexyltrimethoxysilane (He) (trade name: KBM-3063, manufactured by Shin-Etsu Chemical Co., Ltd.) as a hydrolyzable silane compound having an epoxy group were loaded into a 300-ml eggplant flask. Next, 91.87 g of ethanol (EtOH) (KISHIDA CHEMICAL Co., Ltd., reagent grade) were added to the eggplant flask.

Further, a football-type stirring bar (having an overall length of 45 mm and a diameter of 20 mm) was loaded into the flask, and then the contents were mixed by stirring on a stirrer at room temperature and the number of rotations of 500 rpm for 1 minute. Further, the number of rotations of the stirrer was changed to 900 rpm, and then 11.34 g of ion-exchanged water (pH=5.5) were added dropwise to the flask. The solid content at the time of the synthesis was 28.00 mass%.

An oil bath set to 120°C was placed on a stirrer with a temperature runaway-preventing mechanism. The flask was placed in the oil bath and then the number of rotations was set to 750 rpm. The temperature of the contents in the flask reached 120°C in 20 minutes and then a first-stage reaction was performed by reflux under heating for 20 hours. Thus, a condensate intermediate-1 was obtained.

<Preparation of condensate 1-1>

167.39 Grams of the condensate intermediate-1 were loaded into a 300-ml eggplant flask. Further, 4.25 g of titanium i-propoxide (Ti-1) (manufactured by Kojundo Chemical Laboratory Co., Ltd.) and 4.62 g of germanium ethoxide (manufactured by Gelest, Inc.) were loaded into the 300-ml eggplant flask, and then the mixture was stirred at room temperature for 3 hours. Thus, a condensate 1-1 was synthesized.

<Preparation of paint 1-1 for forming surface layer>

A paint 1-1 for forming a surface layer was prepared with the condensate 1-1 by the following procedure. First, a mass (A) of a measuring cup made of aluminum was measured. The condensate 1-1 was weighed with a precision balance by using the measuring cup. The value at this time is defined as a mass (B). Next, the measuring cup loading the condensate 1-1 was placed in an oven at a temperature of 200°C for 30 minutes. Thus, the moisture of the condensate 1-1 was evaporated. After that, the mass of the measuring cup was measured with the precision balance. The value at this time is defined as a mass (C). The solid content of the condensate 1-1 was calculated with the masses (A) to (C) from the following (mathematical equation 2).

(Mathematical equation 2)

Solid content (mass%)=((C-A)/B)×100

Next, a solution of an aromatic sulfonium salt as a photocationic polymerization initiator (trade name: Adekaoptomer SP-150, manufactured by ADEKA CORPORATION) was prepared so that its concentration in ethanol was 10 mass%.

In addition, ethanol was added to the condensate 1-1 to adjust the solid content concentration to 7.2 mass%. The solution prepared by diluting the photocationic polymerization initiator with ethanol was added to the resultant so that the amount of the solution of the photocationic polymerization initiator was 3.0 parts by mass with respect to 100 parts by mass of the solid content of the condensate 1-1. The resultant is defined as the paint 1-1 for forming a surface layer.

<Evaluation (2): Evaluation of paint 1-1 for forming surface layer for its stability>

The paint 1-1 for forming a surface layer was charged into a transparent beaker and then left to stand. The state of the opacification or precipitation of the paint was visually observed and evaluated on the basis of criteria shown in Table 3 below.

Table 3

| Rank | Criterion |
|---|---|
| A | Such a state that none of the opacification and the precipitation occurs even after standing for 1 month is established. |
| B | Such a state that the paint opacifies after a lapse of about 2 weeks is established. |
| C | Such a state that the paint opacifies after a lapse of about 1 week is established. |
| D | Such a state that the opacification and the precipitation occur at the time of the synthesis is established. |

<Evaluation (3): Evaluation of cured film of condensate 1-1 for its chemical structure>

The presence or absence of a structure represented by the formula (1) in a cured film of the condensate 1-1 was determined by the following method.

First, the paint 1-1 for forming a surface layer was applied to the degreased surface of a sheet made of aluminum having a thickness of 100 μm by spin coating. A 1H-D7 (trade name, manufactured by MIKASA CO., LTD.) was used as a spin coating apparatus. The spin coating was performed under the conditions of the number of rotations of 300 rpm and a time of rotation of 2 seconds.

The coating film of the paint 1-1 for forming a surface layer was dried. After that, the coating film was irradiated with UV light having a wavelength of 254 nm. Thus, the coating film was cured. The integral light quantity of the UV light with which the coating film was irradiated was set to 9,000 $mJ/cm^2$. It should be noted that a low-pressure mercury lamp (manufactured by HARISON TOSHIBA LIGHTING Corporation) was used in the irradiation with the UV light.

Next, the cured film was released from the sheet made of aluminum and then pulverized with a mortar made of agate. Thus, a sample for NMR measurement was prepared. The $^{29}$Si-NMR spectrum and $^{13}$C-NMR spectrum of the sample were measured with a nuclear magnetic resonance apparatus (trade name: JMN-EX400, manufactured by JEOL Ltd.).

FIG. 6 shows the $^{29}$Si-NMR spectrum. In the figure, peaks obtained by subjecting the spectrum to wave-form separation are also shown. A peak around -64 ppm to -74 ppm shows a $T^3$ component. Here, the term "$T^3$ component" refers to a state in which Si having one bond to an organic functional group has three bonds to other atoms (Si, B) through O, in other words, the state of $-SiO_{3/2}$. It was confirmed from FIG. 6 that a hydrolyzable silane compound having an organic chain including an epoxy group condensed and hence a certain species existed in the state of $-SiO_{3/2}$.

In addition, FIG. 7 shows the $^{13}$C-NMR spectrum. Peaks each showing an epoxy group before ring-opening appear at around 44 ppm and 51 ppm, and peaks after ring-opening polymerization appear at around 69 ppm and 72 ppm. It was confirmed from FIG. 7 that ring-unopened epoxy groups polymerized nearly without remaining.

It was confirmed from the foregoing $^{29}$Si-NMR measurement and $^{13}$C-NMR measurement that the structure represented by the formula (1) existed in the cured film of the condensate 1-1.

<Evaluation (4): Elastic modulus of cured film of condensate 1-1>

A sample for elastic modulus measurement was prepared by the following method. That is, the paint 1-1 for forming a surface layer was formed into a film on a sheet made of aluminum having a thickness of 100 μm with a spin coating apparatus (1H-D7, (MIKASA CO., LTD.)) at the number of rotations of 300 rpm for 2 seconds. When the solid content concentration in the paint 1-1 for forming a surface layer is about 7 mass%, a coating film having a thickness of about 5.0 μm can be formed by the method. It should be noted that the spin coating may be performed multiple times in order that the thickness of the cured film has a thickness enough for the film to be subjected to a physical property test to be described later.

After having been dried, the coating film was cured by being irradiated with UV light having a wavelength of 254 nm so that its integral light quantity was 9,000 mJ/cm$^2$. Thus, the sample for film physical property measurement was prepared. It should be noted that a low-pressure mercury lamp (manufactured by HARISON TOSHIBA LIGHTING Corporation) was used in the irradiation with the UV light.

A value to be measured with a surface film physical property tester (trade name: FISCHER SCOPE H100V; manufactured by Fischer Instruments K.K.) when an indenter was caused to enter from the surface of the sample at 0.5 μm/7s was defined as the elastic modulus of the cured film of the condensate 1-1.

<Production and evaluations of charging roller 1-1>

The paint 1-1 for forming a surface layer was applied to the peripheral surface of the electro-conductive elastic layer of the electro-conductive elastic roller-1 by ring application (discharge amount: 0.120 ml/s, speed of a ring portion: 85 mm/s, total discharge amount: 0.130 ml). The resultant was cured (cured through a crosslinking reaction) by being irradiated with UV light having a wavelength of 254 nm so that its integral light quantity was 9,000 mJ/cm$^2$. Thus, a surface layer was formed. A low-pressure mercury lamp (manufactured by HARISON TOSHIBA LIGHTING Corporation) was used in the irradiation with the UV light. Thus, a charging roller 1-1 was obtained.

<Evaluation (5): evaluation of paint 1-1 for forming surface layer for coating property>

The external appearance of the surface of the charging roller 1-1 was visually determined by the following criteria in Table 4 to evaluate the paint 1-1 for forming a surface layer for its coating property.

Table 4

| Rank | Criterion |
|---|---|
| A | The surface of the charging roller is completely free of any coating failure. |
| B | A coating failure occurred in part of the surface of the charging roller. |
| C | A coating failure occurred in the entire region of the surface of the charging roller. |

<Evaluation (6): Thickness of surface layer>

The thickness of the surface layer was measured as described below. That is, the thickness of the surface layer was measured as described below. Four sites in a circumferential direction at the central portion in the axial direction of the charging roller were sampled, and then a section in the depth direction of the surface layer was observed with a scanning electron microscope (trade name: HD-2000, manufactured by Hitachi, Ltd.) at an accelerating voltage of 5 kV to 20 kV and a magnification of 10,000, followed by the measurement.

<Evaluation (7): Evaluation of crack in surface of charging roller>

The surface of the charging roller was observed with a color 3D laser microscope (trade name: VK-8700, manufactured by KEYENCE CORPORATION) at a magnification of 1,000 (objective lens: ×50). Surface roughnesses (Rz and Ry) were evaluated with analysis software VK Analyzer.

<Evaluation (8): Confirmation of Si-O-Ti bond, Si-O-Ge bond, and Ti-O-Ge bond>

The presence of an Si-O-Ti bond or the like in the surface layer of the charging roller was confirmed with ESCA (trade name: Quantum 2000, ULVAC-PHI, Inc.). That is, the surface of the charging roller was irradiated with an X-ray

and then a bonding mode in the surface layer was evaluated. It was confirmed from detected O1s spectrum that the Si-O-Ti bond, an Si-O-Ge bond, and a Ti-O-Ge bond were present in the surface layer of the charging roller.

<Evaluation (9): Image evaluation>

A laser beam printer (trade name: HP LaserJet P1505 Printer, manufactured by Hewlett-Packard Company) was prepared as an electrophotographic apparatus. The laser beam printer can output A4-sized paper in its longitudinal direction. In addition, the laser printer has a print speed of 23 sheets/min and an image resolution of 600 dpi. The charging roller 1-1 was incorporated into a process cartridge for the laser beam printer (trade name: "HP 36A (CB436A)," manufactured by Hewlett-Packard Company) and then the process cartridge was mounted on the laser beam printer.

Such an image that the letter of an alphabet "E" having a size of 4 points was printed on A4-sized paper at a print percentage of 1% was formed on 1,000 sheets with the laser beam printer under a normal-temperature, normal-humidity environment (having a temperature of 25°C and a humidity of 55%RH). It should be noted that the formation of the electrophotographic images was performed according to the so-called intermittent mode in which every time one image was output, the rotation of an electrophotographic photosensitive member was stopped over 7 seconds. The 1,000-th electrophotographic image thus obtained was visually observed and evaluated by criteria shown in Table 5 below.

Table 5

| Rank | Evaluation criterion |
|---|---|
| A | No vertical streak image occurs. |
| B | An extremely slight vertical streak image occurs. |
| C | A vertical streak image at such a level as to cause no problems in practical use occurs. |
| D | A vertical streak image is conspicuous. |

(Example 1-2 to Example 1-36)

<Preparation of condensate intermediates-2 to 7>

Condensate intermediates-2 to 7 were each prepared in the same manner as in the condensate intermediate-1 according to Example 1 except that composition shown in Table 6 below was adopted. It should be noted that symbols "EP-1" to "EP-4," "He," and "Ph" in Table 6 represent compounds shown in Table 7.

Table 6

| | Hydrolyzable compound according to formula (13) | | | | Hydrolyzable compound according to formula (23) | | $H_2O$ (g) | EtOH (g) |
|---|---|---|---|---|---|---|---|---|
| Condensate intermediate No. | EP-1 (g) | EP-2 (g) | EP-3 (g) | EP-4 (g) | He (g) | Ph (g) | | |
| 1 | 11.56 | - | - | - | 62.11 | - | 11.34 | 91.87 |
| 2 | 38.35 | - | - | - | 33.53 | - | 10.53 | 84.48 |
| 3 | 11.85 | - | - | - | 31.82 | 37.07 | 11.62 | 94.22 |
| 4 | 69.97 | - | - | - | - | - | 9.61 | 84.48 |
| 5 | - | 77.18 | - | - | - | - | 13.02 | 86.38 |
| 6 | - | - | 75.97 | - | - | - | 7.73 | 93.07 |
| 7 | - | - | - | 68.74 | - | - | 9.04 | 98.97 |

Table 7

| Symbol | Compound name | Manufacturer |
|---|---|---|
| EP-1 | 3-Glycidoxypropyltrimethoxysilane | Shin-Etsu Chemical Co., Ltd. |

(continued)

| Symbol | Compound name | Manufacturer |
|---|---|---|
| EP-2 | 4-(Trimethoxysilyl)butane-1,2-epoxide | Carbone Scientific |
| EP-3 | 8-Oxiran-2-yl-octyltriethoxysilane | SiKEMIA |
| EP-4 | 1-(3,4-Epoxycyclohexyl)ethyltrimethoxysilane | Shin-Etsu Chemical Co., Ltd. |
| He | Hexyltrimethoxysilane | Shin-Etsu Chemical Co., Ltd. |
| Ph | Phenyltrimethoxysilane | Shin-Etsu Chemical Co., Ltd. |
| Ti-1 | Titanium i-propoxide | Kojundo Chemical Laboratory Co., Ltd. |
| Ti-2 | Titanium methoxide | Gelest |
| Ti-3 | Titanium nonyloxide | Gelest |
| Zr-1 | Zirconium n-propoxide | Gelest |
| Zr-2 | Zirconium i-propoxide | Gelest |
| Zr-3 | Zirconium t-propoxide | Gelest |
| Hf-1 | Hafnium n-butoxide | Gelest |
| Hf-2 | Hafnium ethoxide | Gelest |
| Hf-3 | Hafnium 2-methoxymethyl-2-propoxide | Gelest |
| Ta-1 | Tantalum methoxide | Gelest |
| Ta-2 | Tantalum ethoxide | Gelest |
| Ta-3 | Tantalum n-butoxide | Gelest |
| Ge | Germanium ethoxide | Gelest |

<Preparation of condensates 1-2 to 1-31>

Condensates 1-2 to 1-31 were each synthesized in the same manner as in the condensate 1-1 according to Example 1 except that composition shown in Table 8-1 below was adopted.

Table 8-1

| Condensate No. | Condensate intermediate | | Ti-1 | Ti-2 | Ti-3 | Ge | (Zr+Ge) /Si |
|---|---|---|---|---|---|---|---|
| | No. | Blending amount (part(s) by mass) | Blending amount (part(s) by mass) | Blending amount (part(s) by mass) | Blending amount (part(s) by mass) | Blending amount (part(s) by mass) | |
| 1-1 | 1 | 167.93 | 4.25 | - | - | 4.62 | 0.10 |
| 1-2 | | 167.71 | 6.32 | - | - | 2.77 | 0.10 |
| 1-3 | | 167.49 | 8.38 | - | - | 0.92 | 0.10 |
| 1-4 | | 151.23 | 5.44 | - | - | 20.13 | 0.33 |
| 1-5 | | 138.50 | 33.11 | - | - | 5.20 | 0.50 |
| 1-6 | | 129.03 | 46.69 | - | - | 1.07 | 0.66 |
| 1-7 | | 113.61 | 57.51 | - | - | 5.68 | 1.00 |
| 1-8 | | 115.92 | 26.08 | - | - | 34.80 | 1.00 |
| 1-9 | | 96.30 | 74.48 | - | - | 6.02 | 1.50 |
| 1-10 | | 97.54 | 54.86 | - | - | 24.40 | 1.50 |

(continued)

| Condensate No. | Condensate intermediate | | Ti-1 | Ti-2 | Ti-3 | Ge | (Zr+Ge)/Si |
|---|---|---|---|---|---|---|---|
| | No. | Blending amount (part(s) by mass) | Blending amount (part(s) by mass) | Blending amount (part(s) by mass) | Blending amount (part(s) by mass) | Blending amount (part(s) by mass) | |
| 1-11 | | 100.56 | 7.07 | - | - | 69.17 | 1.50 |
| 1-12 | | 74.83 | 75.76 | - | - | 26.21 | 2.50 |
| 1-13 | | 76.24 | 47.17 | - | - | 53.40 | 2.50 |
| 1-14 | | 66.10 | 104.09 | - | - | 6.61 | 3.00 |
| 1-15 | | 41.23 | 106.68 | - | - | 28.88 | 6.00 |
| 1-16 | | 73.55 | 101.97 | - | - | 1.29 | 2.50 |
| 1-17 | | 67.67 | 68.51 | - | - | 40.62 | 3.00 |
| 1-18 | 2 | 43.58 | 104.84 | - | - | 28.38 | 6.00 |
| 1-19 | 3 | 40.46 | 107.29 | - | - | 29.05 | 6.00 |
| 1-20 | 4 | 46.70 | 102.38 | - | - | 27.72 | 6.00 |
| 1-21 | 5 | 36.97 | 110.04 | - | - | 29.79 | 6.00 |
| 1-22 | 6 | 69.46 | - | 74.17 | - | 33.17 | 6.00 |
| 1-23 | 7 | 29.14 | - | - | 131.38 | 16.28 | 6.00 |
| 1-24 | 1 | 22.13 | 147.19 | - | - | 7.47 | 12.50 |
| 1-25 | | 22.49 | 123.94 | - | - | 30.37 | 12.50 |
| 1-26 | | 22.98 | 91.75 | - | - | 62.07 | 12.50 |
| 1-27 | | 56.57 | 63.63 | - | - | 56.60 | 4.00 |
| 1-28 | | 23.49 | 58.13 | - | - | 95.18 | 12.50 |
| 1-29 | | 24.30 | 4.78 | - | - | 147.72 | 12.50 |
| 1-30 | | 18.83 | 150.43 | - | - | 7.54 | 15.00 |
| 1-31 | | 55.46 | 93.59 | - | - | 27.75 | 4.00 |

<Preparation of paints 1-2 to 1-31 for forming surface layers>

Paints 1-2 to 1-31 for forming surface layers were prepared in the same manner as in the paint 1-1 for forming a surface layer except that the condensates 1-2 to 1-31 were used. Those paints were subjected to Evaluations (2) to (4) .

Table 8-2 shows the results of Evaluations (2) to (4) of the paints 1-1 to 1-31 for forming surface layers.

Table 8-2

| Paint for forming surface layer No. | Evaluation (2) | Evaluation (3) | Evaluation (4) | |
|---|---|---|---|---|
| | | Presence or absence of structure represented by formula (1) | Thickness (μm) | Elastic modulus (GPa) |
| 1-1 | A | Present | 5 | 1.02 |
| 1-2 | A | Present | 5 | 1.20 |
| 1-3 | A | Present | 5 | 1.22 |
| 1-4 | A | Present | 5 | 0.98 |

(continued)

| Paint for forming surface layer No. | Evaluation (2) | Evaluation (3) | Evaluation (4) | |
|---|---|---|---|---|
| | | Presence or absence of structure represented by formula (1) | Thickness (μm) | Elastic modulus (GPa) |
| 1-5 | A | Present | 5 | 2.55 |
| 1-6 | A | Present | 5 | 3.30 |
| 1-7 | A | Present | 5 | 4.01 |
| 1-8 | A | Present | 5 | 1.73 |
| 1-9 | A | Present | 5 | 4.88 |
| 1-10 | A | Present | 5 | 3.41 |
| 1-11 | A | Present | 5 | 1.05 |
| 1-12 | A | Present | 5 | 4.36 |
| 1-13 | A | Present | 5 | 2.82 |
| 1-14 | A | Present | 5 | 5.92 |
| 1-15 | A | Present | 5 | 5.82 |
| 1-16 | A | Present | 5 | 6.06 |
| 1-17 | A | Present | 5 | 3.83 |
| 1-18 | A | Present | 5 | 5.96 |
| 1-19 | A | Present | 5 | 5.86 |
| 1-20 | A | Present | 5 | 6.02 |
| 1-21 | A | Present | 5 | 6.12 |
| 1-22 | A | Present | 5 | 6.13 |
| 1-23 | A | Present | 5 | 5.66 |
| 1-24 | B | Present | 5 | 7.74 |
| 1-25 | B | Present | 5 | 6.14 |
| 1-26 | B | Present | 5 | 4.67 |
| 1-27 | A | Present | 5 | 3.41 |
| 1-28 | A | Present | 5 | 2.92 |
| 1-29 | B | Present | 5 | 0.96 |
| 1-30 | A | Present | 5 | 7.84 |
| 1-31 | A | Present | 5 | 5.82 |

<Production of charging rollers 1-2 to 1-30>

Charging rollers 1-2 to 1-30 were produced in the same manner as in the charging roller 1-1 except that the paints 1-2 to 1-30 for forming surface layers were used, and then the charging rollers were subjected to Evaluations (5) to (9).

<Production of charging rollers 1-31 and 1-32>

Charging rollers 1-31 and 1-32 were produced in the same manner as in the charging roller 1-1 except that the paint 1-31 for forming a surface layer was used and the thickness of the surface layer was set to 2.00 μm or 0.50 μm, and then the charging rollers were subjected to Evaluations (5) to (9).

<Production of charging rollers 1-33 to 1-36>

Charging rollers 1-33 to 1-36 were produced in the same manner as in the charging roller 1-1 except that the electro-conductive elastic roller-2, 3, 4, or 5 was used, and then the charging rollers were subjected to Evaluations (5) to (9).
Table 8-3 shows the results of Evaluations (5) to (9) of the charging rollers 1-1 to 1-36 according to Examples 1-1 to 1-36.

Table 8-3

| Example | Charging roller No. | Evaluation (5) | Evaluation (6) | Evaluation (7) | | | Evaluation (8) | Evaluation (9) |
|---|---|---|---|---|---|---|---|---|
| | | | (μm) | Presence or absence of crack | Rz (μm) | Ry (μm) | Presence or absence of Si-O-Ti, Si-O-Ge, and Ti-O-Ge bonds | |
| 1-1 | 1-1 | A | 1.00 | Present | 8.1 | 10.9 | Present | C |
| 1-2 | 1-2 | A | 1.00 | Present | 8.3 | 11.2 | Present | C |
| 1-3 | 1-3 | A | 1.00 | Present | 8.6 | 11.5 | Present | C |
| 1-4 | 1-4 | A | 1.00 | Present | 8.1 | 10.9 | Present | C |
| 1-5 | 1-5 | A | 1.00 | Present | 9.2 | 12.3 | Present | B |
| 1-6 | 1-6 | A | 1.00 | Present | 9.5 | 12.7 | Present | B |
| 1-7 | 1-7 | A | 1.00 | Present | 9.6 | 12.8 | Present | B |
| 1-8 | 1-8 | A | 1.00 | Present | 8.9 | 11.9 | Present | C |
| 1-9 | 1-9 | A | 1.00 | Present | 9.8 | 13.0 | Present | B |
| 1-10 | 1-10 | A | 1.00 | Present | 9.5 | 12.7 | Present | B |
| 1-11 | 1-11 | A | 1.00 | Present | 8.3 | 11.2 | Present | C |
| 1-12 | 1-12 | A | 1.00 | Present | 9.7 | 12.9 | Present | A |
| 1-13 | 1-13 | A | 1.00 | Present | 9.3 | 12.4 | Present | B |
| 1-14 | 1-14 | A | 1.00 | Present | 10.7 | 14.2 | Present | A |
| 1-15 | 1-15 | A | 1.00 | Present | 10.3 | 13.7 | Present | A |
| 1-16 | 1-16 | A | 1.00 | Present | 10.8 | 14.5 | Present | B |
| 1-17 | 1-17 | A | 1.00 | Present | 9.6 | 12.8 | Present | B |
| 1-18 | 1-18 | A | 1.00 | Present | 10.3 | 13.7 | Present | A |
| 1-19 | 1-19 | A | 1.00 | Present | 10.3 | 13.7 | Present | A |
| 1-20 | 1-20 | A | 1.00 | Present | 10.3 | 13.7 | Present | A |
| 1-21 | 1-21 | A | 1.00 | Present | 10.3 | 13.7 | Present | A |
| 1-22 | 1-22 | A | 1.00 | Present | 11.5 | 13.7 | Present | A |
| 1-23 | 1-23 | A | 1.00 | Present | 9.9 | 13.7 | Present | A |
| 1-24 | 1-24 | B | 1.00 | Present | 13.6 | 17.9 | Present | A |
| 1-25 | 1-25 | A | 1.00 | Present | 11.1 | 14.7 | Present | A |
| 1-26 | 1-26 | A | 1.00 | Present | 9.7 | 12.9 | Present | B |
| 1-27 | 1-27 | A | 1.00 | Present | 9.3 | 12.4 | Present | B |
| 1-28 | 1-28 | A | 1.00 | Present | 8.6 | 12.2 | Present | C |
| 1-29 | 1-29 | A | 1.00 | Present | 7.9 | 10.4 | Present | C |

(continued)

| Example | Charging roller No. | Evaluation (5) | Evaluation (6) | Evaluation (7) | | | Evaluation (8) | Evaluation (9) |
|---|---|---|---|---|---|---|---|---|
| | | | (μm) | Presence or absence of crack | Rz (μm) | Ry (μm) | Presence or absence of Si-O-Ti, Si-O-Ge, and Ti-O-Ge bonds | |
| 1-30 | 1-30 | B | 1.00 | Present | 9.3 | 12.4 | Present | B |
| 1-31 | 1-31 | A | 2.00 | Present | 10.1 | 13.4 | Present | A |
| 1-32 | 1-32 | A | 0.50 | Present | 9.0 | 13.4 | Present | B |
| 1-33 | 1-33 | A | 1.00 | Present | 13.2 | 17.5 | Present | A |
| 1-34 | 1-34 | A | 1.00 | Present | 9.7 | 14.1 | Present | B |
| 1-35 | 1-35 | A | 1.00 | Present | 9.9 | 12.9 | Present | B |
| 1-36 | 1-36 | A | 1.00 | Present | 9.6 | 12.5 | Present | B |

(Examples 2-1 to 2-36)

<Preparation of condensates 2-1 to 2-31>

Condensates 2-1 to 2-31 were each synthesized in the same manner as in the condensate 1-1 according to Example 1 except that composition shown in Table 9-1 below was adopted.

Table 9-1

| Condensate No. | Condensate intermediate | | Zr-1 | Zr-2 | Zr-3 | Ge | (Zr+Ge)/Si |
|---|---|---|---|---|---|---|---|
| | No. | Blending amount (part(s) bv mass) | Blending amount (part(s) bv mass) | Blending amount (part(s) bv mass) | Blending amount (part(s) bv mass) | Blending amount (part(s) bv mass) | |
| 2-1 | 1 | 167.32 | 4.88 | - | - | 4.60 | 0.10 |
| 2-2 | | 166.80 | 7.24 | - | - | 2.75 | 0.10 |
| 2-3 | | 166.29 | 9.59 | - | - | 0.92 | 0.10 |
| 2-4 | | 150.52 | 6.24 | - | - | 20.03 | 0.33 |
| 2-5 | | 134.65 | 37.10 | - | - | 5.05 | 0.50 |
| 2-6 | | 124.04 | 51.73 | - | - | 1.03 | 0.66 |
| 2-7 | | 108.24 | 63.15 | - | - | 5.42 | 1.00 |
| 2-8 | | 113.37 | 29.40 | - | - | 34.03 | 1.00 |
| 2-9 | | 90.49 | 80.65 | - | - | 5.66 | 1.50 |
| 2-10 | | 93.13 | 60.37 | - | - | 23.30 | 1.50 |
| 2-11 | | 99.95 | 8.10 | - | - | 68.75 | 1.50 |
| 2-12 | | 70.24 | 81.96 | - | - | 24.60 | 2.50 |
| 2-13 | | 73.26 | 52.23 | - | - | 51.31 | 2.50 |
| 2-14 | | 60.65 | 110.08 | - | - | 6.07 | 3.00 |
| 2-15 | | 37.76 | 112.59 | - | - | 26.45 | 6.00 |

(continued)

| Condensate No. | Condensate intermediate | | Zr-1 | Zr-2 | Zr-3 | Ge | (Zr+Ge)/Si |
|---|---|---|---|---|---|---|---|
| | No. | Blending amount (part(s) bv mass) | Blending amount (part(s) bv mass) | Blending amount (part(s) bv mass) | Blending amount (part(s) bv mass) | Blending amount (part(s) bv mass) | |
| 2-16 | | 67.60 | 108.02 | - | - | 1.18 | 2.50 |
| 2-17 | | 63.89 | 74.55 | - | - | 38.36 | 3.00 |
| 2-18 | 2 | 39.96 | 110.81 | - | - | 26.03 | 6.00 |
| 2-19 | 3 | 31.89 | 117.35 | - | - | 27.56 | 6.00 |
| 2-20 | 4 | 42.91 | 108.42 | - | - | 25.47 | 6.00 |
| 2-21 | 5 | 33.76 | 115.83 | - | - | 27.21 | 6.00 |
| 2-22 | 6 | 50.36 | - | 102.39 | | 24.05 | 6.00 |
| 2-23 | 7 | 40.69 | - | | 113.37 | 22.74 | 6.00 |
| 2-24 | 1 | 19.64 | 150.53 | - | - | 6.63 | 12.50 |
| 2-25 | | 20.31 | 129.05 | - | - | 27.44 | 12.50 |
| 2-26 | | 21.29 | 97.99 | - | - | 57.52 | 12.50 |
| 2-27 | | 53.62 | 69.52 | - | - | 53.66 | 4.00 |
| 2-28 | | 22.37 | 63.79 | - | - | 90.64 | 12.50 |
| 2-29 | | 24.20 | 5.49 | - | - | 147.11 | 12.50 |
| 2-30 | | 16.67 | 153.46 | - | - | 6.67 | 15.00 |
| 2-31 | | 51.32 | 99.80 | - | - | 25.68 | 4.00 |

<Preparation of paints 2-1 to 2-31 for forming surface layers>

Paints 2-1 to 2-31 for forming surface layers were prepared in the same manner as in the paint 1-1 for forming a surface layer except that the condensates 2-1 to 2-31 were used. Those paints were subjected to Evaluations (2) to (4).

Table 9-2 shows the results of Evaluations (2) to (4) of the paints 2-1 to 2-31 for forming surface layers.

Table 9-2

| Paint for forming surface layer No. | Evaluation (2) | Evaluation (3) | Evaluation (4) | |
|---|---|---|---|---|
| | | Presence or absence of structure represented by formula (1) | Thickness (μm) | Elastic modulus (GPa) |
| 2-1 | A | Present | 5 | 1.02 |
| 2-2 | A | Present | 5 | 1.11 |
| 2-3 | A | Present | 5 | 1.23 |
| 2-4 | A | Present | 5 | 1.06 |
| 2-5 | A | Present | 5 | 3.18 |
| 2-6 | A | Present | 5 | 4.00 |
| 2-7 | A | Present | 5 | 4.93 |
| 2-8 | A | Present | 5 | 2.17 |
| 2-9 | A | Present | 5 | 5.91 |

(continued)

| Paint for forming surface layer No. | Evaluation (2) | Evaluation (3) | Evaluation (4) | |
|---|---|---|---|---|
| | | Presence or absence of structure represented by formula (1) | Thickness (μm) | Elastic modulus (GPa) |
| 2-10 | A | Present | 5 | 4.19 |
| 2-11 | A | Present | 5 | 1.08 |
| 2-12 | A | Present | 5 | 5.28 |
| 2-13 | A | Present | 5 | 3.47 |
| 2-14 | B | Present | 5 | 7.40 |
| 2-15 | B | Present | 5 | 7.05 |
| 2-16 | A | Present | 5 | 7.12 |
| 2-17 | A | Present | 5 | 3.86 |
| 2-18 | B | Present | 5 | 7.18 |
| 2-19 | B | Present | 5 | 7.12 |
| 2-20 | B | Present | 5 | 7.28 |
| 2-21 | B | Present | 5 | 7.42 |
| 2-22 | B | Present | 5 | 7.40 |
| 2-23 | B | Present | 5 | 6.92 |
| 2-24 | B | Present | 5 | 8.43 |
| 2-25 | B | Present | 5 | 7.32 |
| 2-26 | B | Present | 5 | 4.86 |
| 2-27 | A | Present | 5 | 3.53 |
| 2-28 | A | Present | 5 | 3.41 |
| 2-29 | A | Present | 5 | 1.01 |
| 2-30 | B | Present | 5 | 8.86 |
| 2-31 | A | Present | 5 | 6.96 |

<Production of charging rollers 2-1 to 2-30>

Charging rollers 2-1 to 2-30 were produced in the same manner as in the charging roller 1-1 except that the paints 2-1 to 2-30 for forming surface layers were used, and then the charging rollers were subjected to Evaluations (5) to (9).

<Production of charging rollers 2-31 and 2-32>

Charging rollers 2-31 and 2-32 were produced in the same manner as in the charging roller 1-1 except that the paint 2-31 for forming a surface layer was used and the thickness of the surface layer was set to 2.00 μm or 0.50 μm, and then the charging rollers were subjected to Evaluations (5) to (9).

<Charging rollers 2-33 to 2-36>

Charging rollers 2-33 to 2-36 were produced in the same manner as in the charging roller 1-1 except that the electro-conductive elastic roller-2, 3, 4, or 5 was used, and then the charging rollers were subjected to Evaluations (5) to (9).

Table 9-3 shows the results of Evaluations (5) to (9) of the charging rollers 2-1 to 2-36 according to Examples 2-1 to 2-36.

Table 9-3

| Example | Charging roller No. | Evaluation (5) | Evaluation (6) | Evaluation (7) | | | Evaluation (8) | Evaluation (9) |
|---|---|---|---|---|---|---|---|---|
| | | | (μm) | Presence or absence of crack | Rz (μm) | Ry (μm) | Presence or absence of Si-O-Zr, Si-O-Ge, and Zr-O-Ge bonds | |
| 2-1 | 2-1 | A | 1.00 | Present | 8.6 | 12.0 | Present | C |
| 2-2 | 2-2 | A | 1.00 | Present | 8.7 | 11.9 | Present | C |
| 2-3 | 2-3 | A | 1.00 | Present | 9.0 | 12.1 | Present | C |
| 2-4 | 2-4 | A | 1.00 | Present | 8.3 | 11.4 | Present | C |
| 2-5 | 2-5 | A | 1.00 | Present | 9.5 | 12.9 | Present | B |
| 2-6 | 2-6 | A | 1.00 | Present | 9.6 | 12.9 | Present | B |
| 2-7 | 2-7 | A | 1.00 | Present | 9.9 | 13.2 | Present | B |
| 2-8 | 2-8 | A | 1.00 | Present | 9.3 | 12.4 | Present | C |
| 2-9 | 2-9 | A | 1.00 | Present | 10.2 | 13.5 | Present | B |
| 2-10 | 2-10 | A | 1.00 | Present | 10.0 | 14.7 | Present | B |
| 2-11 | 2-11 | A | 1.00 | Present | 8.8 | 12.2 | Present | C |
| 2-12 | 2-12 | A | 1.00 | Present | 10.2 | 13.8 | Present | A |
| 2-13 | 2-13 | A | 1.00 | Present | 9.7 | 15.5 | Present | B |
| 2-14 | 2-14 | A | 1.00 | Present | 11.2 | 13.4 | Present | A |
| 2-15 | 2-15 | A | 1.00 | Present | 10.6 | 12.5 | Present | A |
| 2-16 | 2-16 | A | 1.00 | Present | 11.6 | 13.8 | Present | B |
| 2-17 | 2-17 | A | 1.00 | Present | 9.9 | 12.0 | Present | B |
| 2-18 | 2-18 | A | 1.00 | Present | 10.7 | 12.7 | Present | A |
| 2-19 | 2-19 | A | 1.00 | Present | 10.6 | 12.7 | Present | A |
| 2-20 | 2-20 | A | 1.00 | Present | 10.8 | 13.3 | Present | A |
| 2-21 | 2-21 | A | 1.00 | Present | 10.6 | 13.1 | Present | A |
| 2-22 | 2-22 | A | 1.00 | Present | 12.2 | 16.4 | Present | A |
| 2-23 | 2-23 | A | 1.00 | Present | 10.5 | 14.0 | Present | A |
| 2-24 | 2-24 | B | 1.00 | Present | 14.4 | 20.7 | Present | A |
| 2-25 | 2-25 | B | 1.00 | Present | 12.0 | 15.6 | Present | A |
| 2-26 | 2-26 | A | 1.00 | Present | 10.4 | 14.0 | Present | A |
| 2-27 | 2-27 | A | 1.00 | Present | 9.9 | 13.8 | Present | B |
| 2-28 | 2-28 | A | 1.00 | Present | 9.0 | 9.6 | Present | B |
| 2-29 | 2-29 | A | 1.00 | Present | 8.1 | 9.0 | Present | C |
| 2-30 | 2-30 | B | 1.00 | Present | 9.2 | 10.2 | Present | B |
| 2-31 | 2-31 | A | 2.00 | Present | 10.5 | 16.7 | Present | A |
| 2-32 | 2-32 | A | 0.50 | Present | 9.4 | 12.9 | Present | B |
| 2-33 | 2-33 | A | 1.00 | Present | 14.0 | 19.1 | Present | A |

(continued)

| Example | Charging roller No. | Evaluation (5) | Evaluation (6) | Evaluation (7) | | | Evaluation (8) | Evaluation (9) |
|---|---|---|---|---|---|---|---|---|
| | | | (μm) | Presence or absence of crack | Rz (μm) | Ry (μm) | Presence or absence of Si-O-Zr, Si-O-Ge, and Zr-O-Ge bonds | |
| 2-34 | 2-34 | A | 1.00 | Present | 9.5 | 13.0 | Present | B |
| 2-35 | 2-35 | A | 1.00 | Present | 10.0 | 13.7 | Present | A |
| 2-36 | 2-36 | A | 1.00 | Present | 10.2 | 13.9 | Present | A |

(Examples 3-1 to 3-36)

<Preparation of condensates 3-1 to 3-31>

Condensates 3-1 to 3-31 were each synthesized in the same manner as in the condensate 1-1 according to Example 1 except that composition shown in Table 10-1 below was adopted.

Table 10-1

| Condensate No. | Condensate intermediate | | Hf-1 | Hf-2 | Hf-3 | Ge | (Hf+Ge)/Si |
|---|---|---|---|---|---|---|---|
| | No. | Blending amount (part(s) by mass) | Blending amount (part(s) by mass) | Blending amount (part(s) by mass) | Blending amount (part(s) by mass) | Blending amount (part(s) by mass) | |
| 3-1 | 1 | 165.32 | 6.93 | - | - | 4.55 | 0.10 |
| 3-2 | | 163.86 | 10.23 | - | - | 2.71 | 0.10 |
| 3-3 | | 162.43 | 13.47 | - | - | 0.89 | 0.10 |
| 3-4 | | 148.23 | 8.84 | - | - | 19.73 | 0.33 |
| 3-5 | | 123.33 | 48.85 | - | - | 4.63 | 0.50 |
| 3-6 | | 109.95 | 65.93 | - | - | 0.91 | 0.66 |
| 3-7 | | 93.60 | 78.51 | - | - | 4.68 | 1.00 |
| 3-8 | | 105.68 | 39.40 | - | - | 31.72 | 1.00 |
| 3-9 | | 75.43 | 96.66 | - | - | 4.72 | 1.50 |
| 3-10 | | 81.02 | 75.51 | - | - | 20.27 | 1.50 |
| 3-11 | | 97.98 | 11.41 | - | - | 67.40 | 1.50 |
| 3-12 | | 58.39 | 97.96 | - | - | 20.45 | 2.50 |
| 3-13 | | 64.87 | 66.50 | - | - | 45.43 | 2.50 |
| 3-14 | | 47.66 | 124.37 | - | - | 4.77 | 3.00 |
| 3-15 | | 29.53 | 126.59 | - | - | 20.68 | 6.00 |
| 3-16 | | 53.34 | 122.53 | - | - | 0.93 | 2.50 |
| 3-17 | | 53.94 | 90.48 | - | - | 32.38 | 3.00 |
| 3-18 | 2 | 31.36 | 125.02 | - | - | 20.42 | 6.00 |
| 3-19 | 3 | 24.71 | 130.73 | - | - | 21.36 | 6.00 |

(continued)

| Condensate No. | Condensate intermediate | | Hf-1 | Hf-2 | Hf-3 | Ge | (Hf+Ge)/Si |
|---|---|---|---|---|---|---|---|
| | No. | Blending amount (part(s) by mass) | Blending amount (part(s) by mass) | Blending amount (part(s) by mass) | Blending amount (part(s) by mass) | Blending amount (part(s) by mass) | |
| 3-20 | 4 | 33.83 | 122.89 | - | - | 20.08 | 6.00 |
| 3-21 | 5 | 26.24 | 129.42 | - | - | 21.14 | 6.00 |
| 3-22 | 6 | 47.73 | - | 106.27 | - | 22.80 | 6.00 |
| 3-23 | 7 | 30.22 | - | - | 129.70 | 16.88 | 6.00 |
| 3-24 | 1 | 14.31 | 157.66 | - | - | 4.83 | 12.50 |
| 3-25 | | 15.40 | 140.61 | - | - | 20.80 | 12.50 |
| 3-26 | | 17.13 | 113.38 | - | - | 46.29 | 12.50 |
| 3-27 | | 45.75 | 85.27 | - | - | 45.78 | 4.00 |
| 3-28 | | 19.32 | 79.21 | - | - | 78.28 | 12.50 |
| 3-29 | | 23.88 | 7.79 | - | - | 145.14 | 12.50 |
| 3-30 | | 12.08 | 159.88 | - | - | 4.84 | 15.00 |
| 3-31 | | 41.15 | 115.06 | - | - | 20.59 | 4.00 |

<Preparation of paints 3-1 to 3-31 for forming surface layers>

Paints 3-1 to 3-31 for forming surface layers were prepared in the same manner as in the paint 1-1 for forming a surface layer except that the condensates 3-1 to 3-31 were used. Those paints were subjected to Evaluations (2) to (4).

Table 10-2 shows the results of Evaluations (2) to (4) of the paints 3-1 to 3-31 for forming surface layers.

Table 10-2

| Paint for forming surface layer No. | Evaluation (2) | Evaluation (3) | Evaluation (4) | |
|---|---|---|---|---|
| | | Presence or absence of structure represented by formula (1) | Thickness (μm) | Elastic modulus (GPa) |
| 3-1 | A | Present | 5 | 1.20 |
| 3-2 | A | Present | 5 | 1.60 |
| 3-3 | A | Present | 5 | 2.34 |
| 3-4 | A | Present | 5 | 1.31 |
| 3-5 | A | Present | 5 | 7.14 |
| 3-6 | A | Present | 5 | 9.99 |
| 3-7 | A | Present | 5 | 11.36 |
| 3-8 | A | Present | 5 | 4.86 |
| 3-9 | B | Present | 5 | 14.78 |
| 3-10 | A | Present | 5 | 9.66 |
| 3-11 | A | Present | 5 | 1.41 |
| 3-12 | B | Present | 5 | 13.20 |
| 3-13 | A | Present | 5 | 7.99 |

(continued)

| Paint for forming surface layer No. | Evaluation (2) | Evaluation (3) | Evaluation (4) | |
|---|---|---|---|---|
| | | Presence or absence of structure represented by formula (1) | Thickness (μm) | Elastic modulus (GPa) |
| 3-14 | C | Present | 5 | 16.58 |
| 3-15 | C | Present | 5 | 17.62 |
| 3-16 | C | Present | 5 | 16.97 |
| 3-17 | A | Present | 5 | 10.76 |
| 3-18 | B | Present | 5 | 16.14 |
| 3-19 | B | Present | 5 | 17.94 |
| 3-20 | B | Present | 5 | 16.39 |
| 3-21 | B | Present | 5 | 16.14 |
| 3-22 | B | Present | 5 | 18.88 |
| 3-23 | B | Present | 5 | 15.92 |
| 3-24 | C | Present | 5 | 21.46 |
| 3-25 | C | Present | 5 | 18.90 |
| 3-26 | B | Present | 5 | 13.15 |
| 3-27 | A | Present | 5 | 9.45 |
| 3-28 | A | Present | 5 | 9.00 |
| 3-29 | A | Present | 5 | 0.92 |
| 3-30 | C | Present | 5 | 21.74 |
| 3-31 | B | Present | 5 | 17.94 |

<Production of charging rollers 3-1 to 3-30>

Charging rollers 3-1 to 3-30 were produced in the same manner as in the charging roller 1-1 except that the paints 3-1 to 3-30 for forming surface layers were used, and then the charging rollers were subjected to Evaluations (5) to (9).

<Production of charging rollers 3-31 and 3-32>

Charging rollers 3-31 and 3-32 were produced in the same manner as in the charging roller 1-1 except that the paint 3-31 for forming a surface layer was used and the thickness of the surface layer was set to 2.00 μm or 0.50 μm, and then the charging rollers were subjected to Evaluations (5) to (9).

<Charging rollers 3-33 to 3-36>

Charging rollers 3-33 to 3-36 were produced in the same manner as in the charging roller 1-1 except that the electro-conductive elastic roller-2, 3, 4, or 5 was used, and then the charging rollers were subjected to Evaluations (5) to (9).

Table 10-3 shows the results of Evaluations (5) to (9) of the charging rollers 3-1 to 3-36 according to Examples 3-1 to 3-36.

Table 10-3

| Example | Charging roller No. | Evaluation (5) | Evaluation (6) | Evaluation (7) | | | Evaluation (8) | Evaluation (9) |
|---|---|---|---|---|---|---|---|---|
| | | | (μm) | Presence or absence of crack | Rz (μm) | Ry (μm) | Presence or absence of Si-O-Hf, Si-O-Ge, and Hf-O-Ge bonds | |
| 3-1 | 3-1 | A | 1.00 | Present | 9.0 | 12.6 | Present | C |
| 3-2 | 3-2 | A | 1.00 | Present | 9.1 | 12.5 | Present | C |
| 3-3 | 3-3 | A | 1.00 | Present | 9.4 | 12.7 | Present | C |
| 3-4 | 3-4 | A | 1.00 | Present | 8.7 | 11.9 | Present | C |
| 3-5 | 3-5 | A | 1.00 | Present | 9.9 | 13.5 | Present | B |
| 3-6 | 3-6 | A | 1.00 | Present | 10.0 | 13.4 | Present | B |
| 3-7 | 3-7 | A | 1.00 | Present | 10.3 | 13.8 | Present | A |
| 3-8 | 3-8 | A | 1.00 | Present | 9.7 | 12.9 | Present | B |
| 3-9 | 3-9 | A | 1.00 | Present | 10.6 | 14.1 | Present | A |
| 3-10 | 3-10 | A | 1.00 | Present | 10.4 | 15.3 | Present | A |
| 3-11 | 3-11 | A | 1.00 | Present | 9.2 | 12.7 | Present | C |
| 3-12 | 3-12 | A | 1.00 | Present | 10.6 | 14.4 | Present | A |
| 3-13 | 3-13 | A | 1.00 | Present | 10.1 | 16.1 | Present | B |
| 3-14 | 3-14 | B | 1.00 | Present | 11.6 | 13.8 | Present | A |
| 3-15 | 3-15 | B | 1.00 | Present | 11.0 | 13.0 | Present | A |
| 3-16 | 3-16 | B | 1.00 | Present | 12.0 | 14.3 | Present | A |
| 3-17 | 3-17 | A | 1.00 | Present | 10.3 | 12.4 | Present | A |
| 3-18 | 3-18 | B | 1.00 | Present | 11.1 | 13.2 | Present | A |
| 3-19 | 3-19 | B | 1.00 | Present | 11.0 | 13.1 | Present | A |
| 3-20 | 3-20 | B | 1.00 | Present | 11.2 | 13.8 | Present | A |
| 3-21 | 3-21 | B | 1.00 | Present | 11.0 | 13.6 | Present | A |
| 3-22 | 3-22 | B | 1.00 | Present | 12.6 | 16.9 | Present | A |
| 3-23 | 3-23 | B | 1.00 | Present | 10.9 | 14.5 | Present | A |
| 3-24 | 3-24 | B | 1.00 | Present | 14.8 | 21.3 | Present | A |
| 3-25 | 3-25 | B | 1.00 | Present | 12.4 | 16.1 | Present | A |
| 3-26 | 3-26 | A | 1.00 | Present | 10.8 | 14.5 | Present | A |
| 3-27 | 3-27 | A | 1.00 | Present | 10.3 | 14.4 | Present | A |
| 3-28 | 3-28 | A | 1.00 | Present | 9.4 | 10.1 | Present | B |
| 3-29 | 3-29 | A | 1.00 | Present | 8.5 | 9.4 | Present | C |
| 3-30 | 3-30 | B | 1.00 | Present | 9.6 | 10.7 | Present | A |
| 3-31 | 3-31 | B | 2.00 | Present | 10.9 | 17.3 | Present | A |
| 3-32 | 3-32 | A | 0.50 | Present | 9.8 | 13.4 | Present | A |
| 3-33 | 3-33 | A | 1.00 | Present | 14.4 | 19.7 | Present | A |

(continued)

| Example | Charging roller No. | Evaluation (5) | Evaluation (6) | Evaluation (7) | | | Evaluation (8) | Evaluation (9) |
|---|---|---|---|---|---|---|---|---|
| | | | (μm) | Presence or absence of crack | Rz (μm) | Ry (μm) | Presence or absence of Si-O-Hf, Si-O-Ge, and Hf-O-Ge bonds | |
| 3-34 | 3-34 | A | 1.00 | Present | 9.9 | 13.5 | Present | A |
| 3-35 | 3-35 | A | 1.00 | Present | 10.4 | 14.2 | Present | A |
| 3-36 | 3-36 | A | 1.00 | Present | 10.6 | 14.5 | Present | A |

(Examples 4-1 to 4-36)

<Preparation of condensates 4-1 to 4-31>

Condensates 4-1 to 4-31 were each synthesized in the same manner as in the condensate 1-1 according to Example 1 except that composition shown in Table 11-1 below was adopted.

Table 11-1

| Condensate No. | Condensate intermediate | | Ta-1 | Ta-2 | Ta-3 | Ge | (Ta+Ge) /Si |
|---|---|---|---|---|---|---|---|
| | No. | Blending amount (part(s) by mass) | Blending amount (part(s) by mass) | Blending amount (part(s) by mass) | Blending amount (part(s) by mass) | Blending amount (part(s) by mass) | |
| 4-1 | 1 | 167.20 | 5.00 | - | - | 4.60 | 0.10 |
| 4-2 | | 166.62 | 7.42 | - | - | 2.75 | 0.10 |
| 4-3 | | 166.06 | 9.83 | - | - | 0.91 | 0.10 |
| 4-4 | | 150.39 | 6.40 | - | - | 20.01 | 0.33 |
| 4-5 | | 133.92 | 37.85 | - | - | 5.02 | 0.50 |
| 4-6 | | 123.10 | 52.68 | - | - | 1.02 | 0.66 |
| 4-7 | | 107.24 | 64.19 | - | - | 5.37 | 1.00 |
| 4-8 | | 112.88 | 30.03 | - | - | 33.89 | 1.00 |
| 4-9 | | 89.43 | 81.78 | - | - | 5.59 | 1.50 |
| 4-10 | | 92.31 | 61.40 | - | - | 23.09 | 1.50 |
| 4-11 | | 99.83 | 8.30 | - | - | 68.67 | 1.50 |
| 4-12 | | 69.41 | 83.09 | - | - | 24.31 | 2.50 |
| 4-13 | | 72.70 | 53.18 | - | - | 50.92 | 2.50 |
| 4-14 | | 59.68 | 111.14 | - | - | 5.97 | 3.00 |
| 4-15 | | 37.14 | 113.64 | - | - | 26.02 | 6.00 |
| 4-16 | | 66.54 | 109.09 | - | - | 1.17 | 2.50 |
| 4-17 | | 63.20 | 75.66 | - | - | 37.94 | 3.00 |
| 4-18 | 2 | 39.32 | 111.87 | - | - | 25.61 | 6.00 |
| 4-19 | 3 | 36.43 | 114.22 | - | - | 26.15 | 6.00 |

(continued)

| Condensate No. | Condensate intermediate | | Ta-1 | Ta-2 | Ta-3 | Ge | (Ta+Ge) /Si |
|---|---|---|---|---|---|---|---|
| | No. | Blending amount (part(s) by mass) | Blending amount (part(s) by mass) | Blending amount (part(s) by mass) | Blending amount (part(s) by mass) | Blending amount (part(s) by mass) | |
| 4-20 | 4 | 42.24 | 109.49 | - | - | 25.07 | 6.00 |
| 4-21 | 5 | 33.20 | 116.85 | - | - | 26.75 | 6.00 |
| 4-22 | 6 | 44.21 | - | 111.48 | | 21.11 | 6.00 |
| 4-23 | 7 | 31.99 | - | | 126.94 | 17.87 | 6.00 |
| 4-24 | 1 | 19.21 | 151.10 | - | - | 6.49 | 12.50 |
| 4-25 | | 19.94 | 129.94 | - | - | 26.93 | 12.50 |
| 4-26 | | 20.99 | 99.11 | - | - | 56.70 | 12.50 |
| 4-27 | | 53.08 | 70.61 | - | - | 53.11 | 4.00 |
| 4-28 | | 22.16 | 64.84 | - | - | 89.80 | 12.50 |
| 4-29 | | 24.18 | 5.63 | - | - | 146.99 | 12.50 |
| 4-30 | | 16.30 | 153.97 | - | - | 6.53 | 15.00 |
| 4-31 | | 50.58 | 100.92 | - | - | 25.30 | 4.00 |

<Preparation of paints 4-1 to 4-31 for forming surface layers>

Paints 4-1 to 4-31 for forming surface layers were prepared in the same manner as in the paint 1-1 for forming a surface layer except that the condensates 4-1 to 4-31 were used. Those paints were subjected to Evaluations (2) to (4).

Table 11-2 shows the results of Evaluations (2) to (4) of the paints 4-1 to 4-31 for forming surface layers.

Table 11-2

| Paint for forming surface layer No. | Evaluation (2) | Evaluation (3) | Evaluation (4) | |
|---|---|---|---|---|
| | | Presence or absence of structure represented by formula (1) | Thickness (μm) | Elastic modulus (GPa) |
| 4-1 | A | Present | 5 | 1.94 |
| 4-2 | A | Present | 5 | 2.59 |
| 4-3 | A | Present | 5 | 3.79 |
| 4-4 | A | Present | 5 | 2.13 |
| 4-5 | A | Present | 5 | 11.56 |
| 4-6 | B | Present | 5 | 16.19 |
| 4-7 | B | Present | 5 | 18.40 |
| 4-8 | A | Present | 5 | 7.87 |
| 4-9 | C | Present | 5 | 23.94 |
| 4-10 | B | Present | 5 | 15.64 |
| 4-11 | A | Present | 5 | 2.28 |
| 4-12 | C | Present | 5 | 21.39 |
| 4-13 | B | Present | 5 | 12.94 |

(continued)

| Paint for forming surface layer No. | Evaluation (2) | Evaluation (3) | Evaluation (4) | |
|---|---|---|---|---|
| | | Presence or absence of structure represented by formula (1) | Thickness (μm) | Elastic modulus (GPa) |
| 4-14 | C | Present | 5 | 26.87 |
| 4-15 | C | Present | 5 | 28.54 |
| 4-16 | C | Present | 5 | 27.49 |
| 4-17 | B | Present | 5 | 17.44 |
| 4-18 | C | Present | 5 | 26.15 |
| 4-19 | C | Present | 5 | 29.06 |
| 4-20 | C | Present | 5 | 26.55 |
| 4-21 | C | Present | 5 | 26.15 |
| 4-22 | C | Present | 5 | 30.59 |
| 4-23 | C | Present | 5 | 25.80 |
| 4-24 | C | Present | 5 | 34.77 |
| 4-25 | C | Present | 5 | 30.61 |
| 4-26 | C | Present | 5 | 21.30 |
| 4-27 | B | Present | 5 | 15.30 |
| 4-28 | B | Present | 5 | 14.57 |
| 4-29 | A | Present | 5 | 1.75 |
| 4-30 | C | Present | 5 | 35.22 |
| 4-31 | C | Present | 5 | 29.06 |

<Production of charging rollers 4-1 to 4-30>

Charging rollers 4-1 to 4-30 were produced in the same manner as in the charging roller 1-1 except that the paints 4-1 to 4-30 for forming surface layers were used, and then the charging rollers were subjected to Evaluations (5) to (9).

<Production of charging rollers 4-31 and 4-32>

Charging rollers 4-31 and 4-32 were produced in the same manner as in the charging roller 1-1 except that the paint 4-31 for forming a surface layer was used and the thickness of the surface layer was set to 2.00 μm or 0.50 μm, and then the charging rollers were subjected to Evaluations (5) to (9).

<Charging rollers 4-33 to 4-36>

Charging rollers 4-33 to 4-36 were produced in the same manner as in the charging roller 1-1 except that the electro-conductive elastic roller-2, 3, 4, or 5 was used, and then the charging rollers were subjected to Evaluations (5) to (9).

Table 11-3 shows the results of Evaluations (5) to (9) of the charging rollers 2-1 to 2-36 according to Examples 4-1 to 4-36.

Table 11-3

| Example | Charging roller No. | Evaluation (5) | Evaluation (6) | Evaluation (7) | | | Evaluation (8) | Evaluation (9) |
|---|---|---|---|---|---|---|---|---|
| | | | (μm) | Presence or absence of crack | Rz (μm) | Ry (μm) | Presence or absence of Si-O-Ta, Si-O-Ge, and Ta-O-Ge bonds | |
| 4-1 | 4-1 | A | 1.00 | Present | 9.4 | 12.9 | Present | B |
| 4-2 | 4-2 | A | 1.00 | Present | 9.5 | 12.8 | Present | B |
| 4-3 | 4-3 | A | 1.00 | Present | 9.8 | 13.5 | Present | B |
| 4-4 | 4-4 | A | 1.00 | Present | 9.1 | 12.4 | Present | B |
| 4-5 | 4-5 | A | 1.00 | Present | 10.3 | 13.8 | Present | A |
| 4-6 | 4-6 | A | 1.00 | Present | 10.4 | 13.9 | Present | A |
| 4-7 | 4-7 | A | 1.00 | Present | 10.7 | 14.2 | Present | A |
| 4-8 | 4-8 | A | 1.00 | Present | 10.1 | 13.4 | Present | A |
| 4-9 | 4-9 | A | 1.00 | Present | 11.0 | 16.2 | Present | A |
| 4-10 | 4-10 | A | 1.00 | Present | 10.8 | 14.9 | Present | A |
| 4-11 | 4-11 | A | 1.00 | Present | 9.6 | 13.0 | Present | B |
| 4-12 | 4-12 | A | 1.00 | Present | 11.0 | 17.6 | Present | A |
| 4-13 | 4-13 | A | 1.00 | Present | 10.5 | 12.5 | Present | A |
| 4-14 | 4-14 | B | 1.00 | Present | 12.0 | 14.1 | Present | A |
| 4-15 | 4-15 | B | 1.00 | Present | 11.4 | 13.6 | Present | A |
| 4-16 | 4-16 | B | 1.00 | Present | 12.4 | 15.0 | Present | A |
| 4-17 | 4-17 | A | 1.00 | Present | 10.7 | 12.7 | Present | A |
| 4-18 | 4-18 | B | 1.00 | Present | 11.5 | 13.8 | Present | A |
| 4-19 | 4-19 | B | 1.00 | Present | 11.4 | 14.0 | Present | A |
| 4-20 | 4-20 | B | 1.00 | Present | 11.6 | 14.4 | Present | A |
| 4-21 | 4-21 | B | 1.00 | Present | 11.4 | 15.4 | Present | A |
| 4-22 | 4-22 | B | 1.00 | Present | 13.0 | 17.3 | Present | A |
| 4-23 | 4-23 | B | 1.00 | Present | 11.3 | 16.2 | Present | A |
| 4-24 | 4-24 | B | 1.00 | Present | 15.2 | 19.7 | Present | A |
| 4-25 | 4-25 | B | 1.00 | Present | 12.8 | 17.2 | Present | A |
| 4-26 | 4-26 | A | 1.00 | Present | 11.2 | 15.7 | Present | A |
| 4-27 | 4-27 | A | 1.00 | Present | 10.7 | 11.5 | Present | A |
| 4-28 | 4-28 | A | 1.00 | Present | 9.8 | 10.8 | Present | A |
| 4-29 | 4-29 | A | 1.00 | Present | 8.9 | 9.9 | Present | C |
| 4-30 | 4-30 | B | 1.00 | Present | 10.0 | 15.9 | Present | A |
| 4-31 | 4-31 | B | 2.00 | Present | 11.3 | 15.4 | Present | A |
| 4-32 | 4-32 | A | 0.50 | Present | 10.2 | 13.9 | Present | A |
| 4-33 | 4-33 | A | 1.00 | Present | 14.8 | 20.3 | Present | A |

(continued)

| Example | Charging roller No. | Evaluation (5) | Evaluation (6) | Evaluation (7) | | | Evaluation (8) | Evaluation (9) |
|---|---|---|---|---|---|---|---|---|
| | | | (μm) | Presence or absence of crack | Rz (μm) | Ry (μm) | Presence or absence of Si-O-Ta, Si-O-Ge, and Ta-O-Ge bonds | |
| 4-34 | 4-34 | A | 1.00 | Present | 10.3 | 14.1 | Present | A |
| 4-35 | 4-35 | A | 1.00 | Present | 10.8 | 14.8 | Present | A |
| 4-36 | 4-36 | A | 1.00 | Present | 11.0 | 13.6 | Present | A |

(Comparative Example 1)

<Preparation and evaluations of paint C-1 for forming surface layer>

A paint C-1 for forming a surface layer was prepared in the same manner as in the paint 1-1 for forming a surface layer except that the condensate 1-1 was changed to the condensate intermediate 4. The paint was subjected to Evaluations (2) to (4). Table 12-1 shows the results.

Table 12-1

| Paint for forming surface layer No. | Evaluation (2) | Evaluation (3) | Evaluation (4) | |
|---|---|---|---|---|
| | | Presence or absence of structure represented by formula (1) | Thickness (μm) | Elastic modulus (GPa) |
| C-1 | A | Absent | 5 | 0.10 |

<Production and evaluations of charging rollers C-1 to C-3>

In addition, a charging rollers C-1 to C-3 whose surface layers had thicknesses of 0.5 μm, 1.00 μm, and 2.00 μm, respectively were produced in the same manner as in the charging roller 1-1 except that the paint C-1 for forming a surface layer was used, and then the charging rollers were subjected to Evaluations (5) to (9). Table 12-2 shows the results of the evaluations.

Table 12-2

| Comparative Example | Charging roller No. | Evaluation (5) | Evaluation (6) | Evaluation (7) | | | Evaluation (8) | Evaluation (9) |
|---|---|---|---|---|---|---|---|---|
| | | | (μm) | Presence or absence of crack | Rz (μm) | Ry (μm) | Presence or absence of Si-O-Ti, Si-O-Ge, and Ti-O-Ge bonds | |
| 1 | C-1 | C | 0.50 | Absent | 6.3 | 8.8 | Absent | D |
| | C-2 | C | 1.00 | Absent | 5.3 | 7.8 | Absent | D |
| | C-3 | C | 2.00 | Absent | 4.1 | 6.2 | Absent | D |

(Comparative Examples 2 to 6)

Condensates C-2 to C-6 were each prepared in the same manner as in the condensate intermediate-1 according to Example 1 except that composition shown in Table 13 below was adopted. In all the condensates, opacification and

precipitation occurred during the preparation of the condensates.

Attempts were made to prepare the paints C-2 to C-6 for forming surface layers in the same manner as in the paint 1-1 for forming a surface layer except that the respective condensates thus obtained were used. However, the paints for forming surface layers could not be prepared owing to opacification or precipitation occurring in any such condensate.

It should be noted that symbols "Ti-1," "Zr-1," "Hf-1," "Ta-1," and "Ge" in Table 13 represent compounds shown in Table 7.

Table 13

| Condensate No. | Hydrolyzable compound according to any one of formulae (14) to (18) | | | | | $H_2O$ (g) | EtOH (g) |
|---|---|---|---|---|---|---|---|
| | Ti-1 (g) | Zr-1 (g) | Hf-1 (g) | Ta-1 (g) | Ge (g) | | |
| C-2 | 88.10 | - | - | - | - | 0.84 | 120.66 |
| C-3 | - | 65.68 | - | - | - | 2.23 | 86.59 |
| C-4 | - | - | 37.63 | - | - | 1.44 | 109.89 |
| C-5 | - | - | - | 55.24 | - | 1.01 | 138.16 |
| C-6 | - | - | - | - | 78.37 | 1.68 | 129.55 |

Reference Signs List

| | |
|---|---|
| 101 | support |
| 102 | elastic layer |
| 103 | surface layer |
| 104 | crack portion |
| 1 | photosensitive member |
| 2 | axis |
| 3 | charging member |
| 4 | image exposing means |
| 5 | developing means |
| 6 | transfer means |
| 7 | cleaning means |
| 8 | fixing means |
| 9 | process cartridge |
| 10 | guiding means |
| P | transfer material |

**Claims**

**1.** A charging member, comprising:

a support;
an elastic layer; and
a surface layer,

wherein:

the surface layer comprises a polymer compound having
at least one bond selected from an Si-O-M bond and an Si-O-Ta bond,
at least one bond selected from an M-O-Ge bond and a Ta-O-Ge bond, and
an Si-O-Ge bond;
the polymer compound has
a structural unit represented by the following formula (1),

a structural unit represented by the following formula (2), and
at least one structural unit selected from a structural unit represented by the following formula (3) and a structural unit represented by the following formula (4); and
the charging member has a crack extending from a surface thereof to the elastic layer, and the crack has a convexly raised edge by which the surface of the charging member is roughened, provided that M represents any element selected from the group consisting of Ti, Zr, and Hf:

Formula (1)

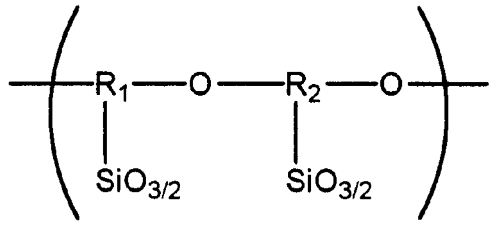

in the formula (1), $R_1$ and $R_2$ each independently represent any one of the following formulae (5) to (8):

Formula (5)

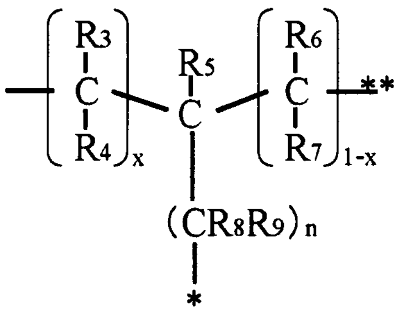

Formula (6)

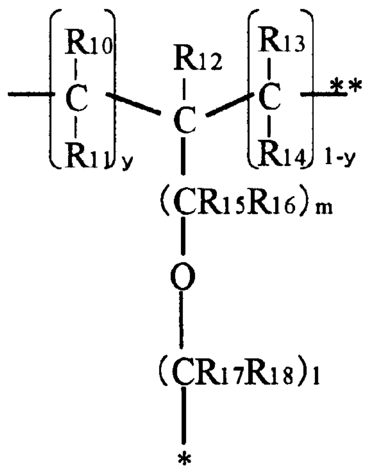

Formula (7)

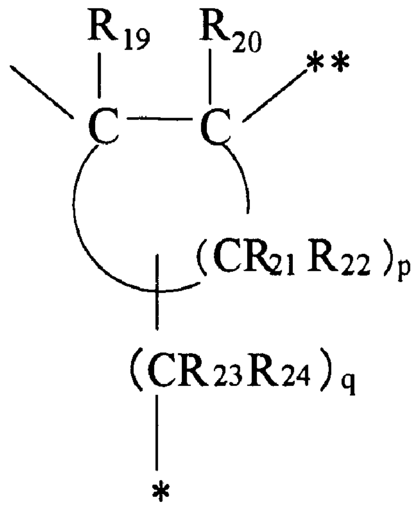

Formula (8)

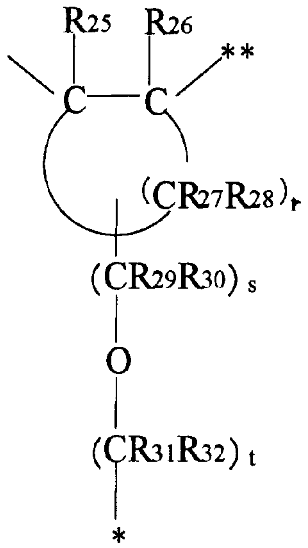

in the formulae (5) to (8), $R_3$ to $R_7$, $R_{10}$ to $R_{14}$, $R_{19}$, $R_{20}$, $R_{25}$, and $R_{26}$ each independently represent a hydrogen atom, an alkyl group having 1 or more and 4 or less carbon atoms, a hydroxyl group, a carboxyl group, or an amino group, $R_2$, $R_9$, $R_{15}$ to $R_{18}$, $R_{23}$, $R_{24}$, and $R_{29}$ to $R_{32}$ each independently represent a hydrogen atom or an alkyl group having 1 or more and 4 or less carbon atoms, $R_{21}$, $R_{22}$, $R_{27}$, and $R_{28}$ each independently represent a hydrogen atom, an alkoxyl group having 1 or more and 4 or less carbon atoms, or an alkyl group having 1 or more and 4 or less carbon atoms, n, m, l, q, s, and t each independently represent an integer of 1 or more and 8 or less, p and r each independently represent an integer of 4 or more and 12 or less, x and y each independently represent 0 or 1, and * and ** represent sites to be bonded to a silicon atom and an oxygen atom in the formula (1), respectively:

Formula (2) **$GeO)_{4/2}$**

Formula (3) **$MO_{4/2}$**

Formula (4) **$TaO_{5/2}$**

in the formula (3), M represents any element selected from the group consisting of Ti, Zr, and Hf.

2. The charging member according to claim 1, wherein in the polymer compound, $R_1$ and $R_2$ in the formula (1) each independently represent any one of the following formulae (9) to (12):

Formula (9)

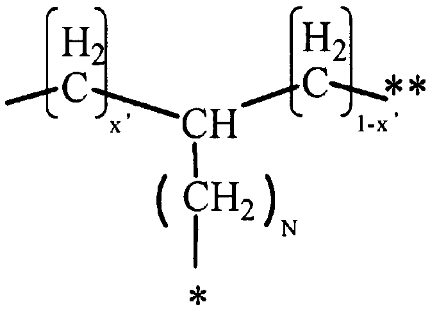

Formula (10)

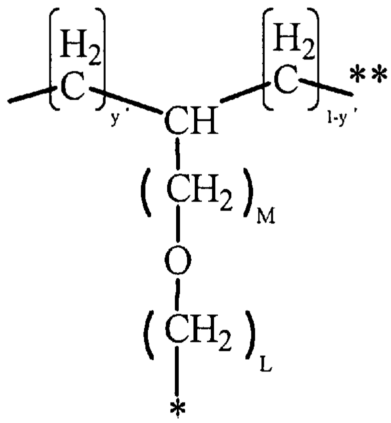

Formula (11)

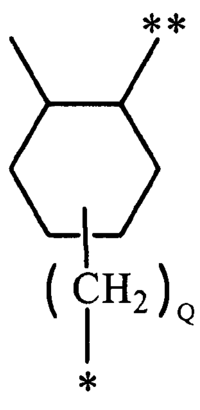

Formula (12)

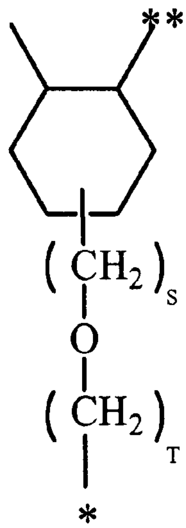

in the formulae (9) to (12), N, M, L, Q, S, and T each independently represent an integer of 1 or more and 8 or less, x' and y' each independently represent 0 or 1, and * and ** represent sites to be bonded to a silicon atom and an oxygen atom in the formula (1), respectively.

**3.** The charging member according to claim 1 or 2, wherein a ratio "(M+Ta+Ge)/Si" of a total sum of the numbers of M, Ta, and Ge atoms to the number of silicon atoms in the polymer compound is 0.10 or more and 12.50 or less.

**4.** The charging member according to any one of claims 1 to 3, wherein the polymer compound comprises a crosslinked product of hydrolyzed condensate of a hydrolyzable compound having a structure represented by a formula (13), at least one of hydrolyzable compounds having structures represented by formulae (14) to (17), and a hydrolyzable compound represented by a formula (18) :

Formula (13) **$R_{33}$-Si ($OR_{34}$) ($OR_{35}$) ($OR_{36}$)**

Formula (14) **Ti ($OR_{37}$) ($OR_{38}$) ($OR_{39}$) ($OR_{40}$)**

Formula (15) **Zr ($OR_{41}$) ($OR_{42}$) ($OR_{43}$) ($OR_{44}$)**

Formula (16) **Hf ($OR_{45}$) ($OR_{46}$) ($OR_{47}$) ($OR_{48}$)**

Formula (17) **Ta ($OR_{49}$) ($OR_{50}$) ($OR_{51}$) ($OR_{52}$) ($OR_{53}$)**

Formula (18) **Ge ($OR_{54}$) ($OR_{55}$ ($OR_{56}$) ($OR_{57}$)**

in the formula (13), $R_{33}$ represents any one of formulae (19) to (22) each having an epoxy group, and $R_{34}$ to $R_{36}$ each independently represent an alkyl group having 1 or more and 4 or less carbon atoms, and in the formulae (14) to (18), $R_{37}$ to $R_{57}$ each independently represent an alkyl group having 1 or more and 9 or less carbon atoms:

Formula (19)

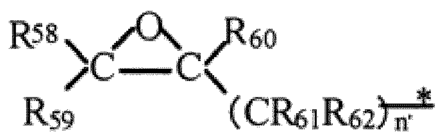

Formula (20)

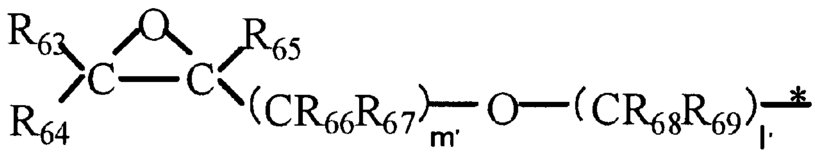

Formula (21)

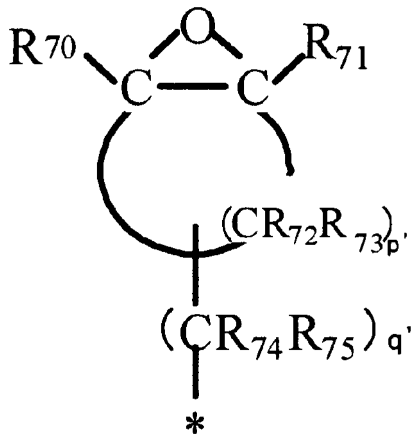

Formula (22)

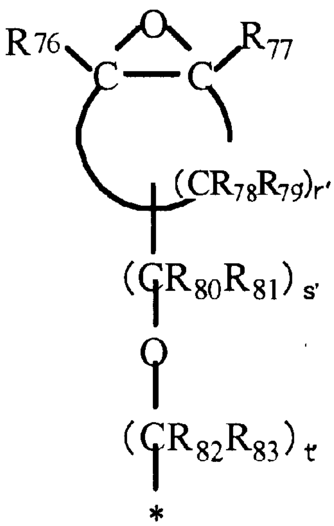

in the formulae (19) to (22), $R_{58}$ to $R_{60}$, $R_{63}$ to $R_{65}$, $R_{70}$, $R_{71}$, $R_{76}$, and $R_{77}$ each independently represent a hydrogen atom, an alkyl group having 1 or more and 4 or less carbon atoms, a hydroxyl group, a carboxyl group, or an amino group, $R_{61}$, $R_{62}$, $R_{66}$ to $R_{69}$, $R_{74}$, $R_{75}$, and $R_{80}$ to $R_{83}$ each independently represent a hydrogen atom or an alkyl group having 1 or more and 4 or less carbon atoms, $R_{72}$, $R_{73}$, $R_{70}$, and $R_{79}$ each independently represent a hydrogen atom, an alkoxyl group having 1 or more and 4 or less carbon atoms, or an alkyl group having 1 or more and 4 or less carbon atoms, n', m', l', q', s', and t' each independently represent an integer of 1 or more and 8 or less, p' and r' each independently represent an integer of 4 or more and 12 or less, and * represents a site to be bonded to a silicon atom in the formula (13).

**5.** The charging member according to any one of claims 1 to 4, wherein the polymer compound comprises a crosslinked product of a hydrolyzable compound having a structure represented by a formula (13), at least one of hydrolyzable

compounds having structures represented by formulae (14) to (17), a hydrolyzable compound represented by a formula (18), and a hydrolyzable compound having a structure represented by the following formula (23):

Formula (23) $\mathbf{R_{84}\text{-}Si\ (OR_{85})\ (OR_{86})\ (OR_{87})}$

in the formula (23), $R_{84}$ represents an alkyl group or an aryl group, and $R_{85}$ to $R_{87}$ each independently represent a hydrocarbon group.

**6.** A method of producing the charging member according to claim 4, the method comprising the steps of:

(i) forming, on an outer periphery of the elastic layer placed on an outer periphery of the support, a coating film of a coating agent containing a hydrolyzed condensate synthesized from the hydrolyzable compound represented by the formula (13), at least one of the hydrolyzable compounds represented by the formulae (14) to (17), and the hydrolyzable compound represented by the formula (18); and
(ii) cleaving an epoxy group of the hydrolyzed condensate to crosslink the hydrolyzed condensate to produce the polymer compound,

wherein in the step (ii), the coating film cures and shrinks to produce the surface layer having the crack.

**7.** A method of producing the charging member according to claim 5, the method comprising the steps of:

(i) forming, on an outer periphery of the elastic layer placed on an outer periphery of the support, a coating film of a coating agent containing a hydrolyzed condensate synthesized from the hydrolyzable compound represented by the formula (13), the hydrolyzable compound represented by the formula (23), at least one of the hydrolyzable compounds represented by the formulae (14) to (17), and the hydrolyzable compound represented by the formula (18); and
(ii) cleaving an epoxy group of the hydrolyzed condensate to crosslink the hydrolyzed condensate to produce the polymer compound,

wherein in the step (ii), the coating film cures and shrinks to produce the surface layer having the crack.

**8.** An electrophotographic apparatus, comprising:

an electrophotographic photosensitive member; and
the charging member according to any one of claims 1 to 5 placed to be capable of charging the electrophotographic photosensitive member.

**9.** A process cartridge, comprising:

an electrophotographic photosensitive member; and the charging member according to any one of claims 1 to 5 for charging the electrophotographic photosensitive member, wherein
the process cartridge is detachably mountable to a main body of an electrophotographic apparatus.

## Patentansprüche

**1.** Ladungselement, das umfasst:

einen Träger;
eine elastische Schicht; und
eine Oberflächenschicht,

wobei:

die Oberflächenschicht eine Polymerverbindung umfasst, die
zumindest eine Bindung ausgewählt aus einer Si-O-M Bindung und einer Si-O-Ta Bindung,
zumindest eine Bindung ausgewählt aus einer M-O-Ge Bindung und einer Ta-O-Ge Bindung, und
eine Si-O-Ge Bindung umfasst;

die Polymerverbindung
eine durch die folgende Formel (1) dargestellte Struktureinheit,
eine durch die folgende Formel (2) dargestellte Struktureinheit, und
zumindest eine Struktureinheit ausgewählt aus einer durch die folgende Formel (3) dargestellten Struktureinheit und einer durch die folgende Formel (4) dargestellten Struktureinheit aufweist; und

das Ladungselement einen Riss aufweist, der sich von dessen Oberfläche zu der elastischen Schicht erstreckt, und wobei der Riss eine konvex ansteigende Kante aufweist, wodurch die Oberfläche des Ladungselements aufgeraut ist, vorausgesetzt, dass M irgendein Element ausgewählt aus der Gruppe bestehend aus Ti, Zr und Hf darstellt:

Formel (1):

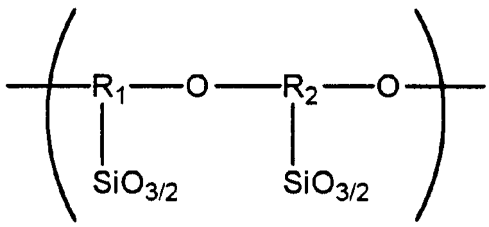

in der Formel (1) stellen $R_1$ und $R_2$ jeweils unabhängig irgendeine der folgenden Formeln (5) bis (8) dar:

Formel (5)

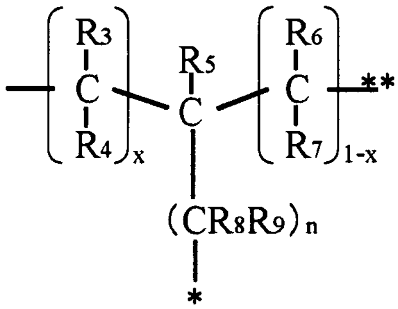

Formel (6)

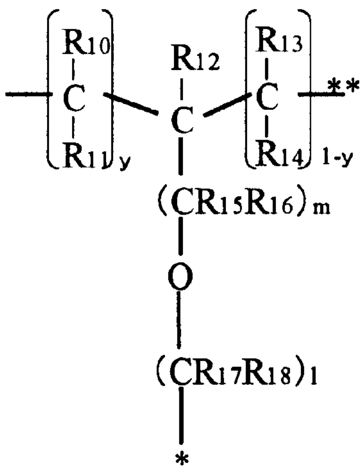

Formel (7)

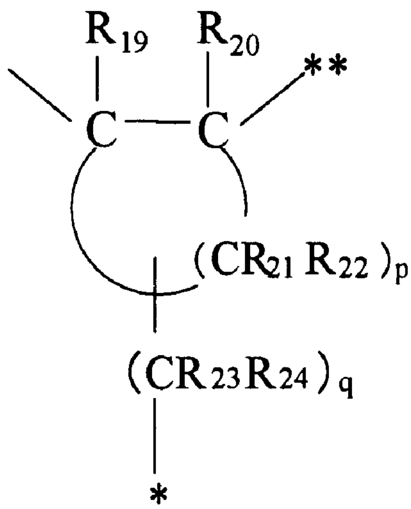

Formel (8)

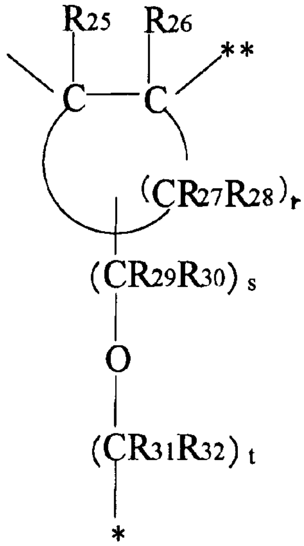

in den Formeln (5) bis (8) stellen $R_3$ bis $R_7$, $R_{10}$ bis $R_{14}$, $R_{19}$, $R_{20}$, $R_{25}$ und $R_{26}$ jeweils unabhängig ein Wasserstoffatom, eine Alkylgruppe mit 1 oder mehr und 4 oder weniger Kohlenstoffatomen, eine Hydroxylgruppe, eine Carboxylgruppe oder eine Aminogruppe dar, stellen $R_8$, $R_9$, $R_{15}$ bis $R_{18}$, $R_{23}$, $R_{24}$ und $R_{29}$ bis $R_{32}$ jeweils unabhängig ein Wasserstoffatom oder eine Alkylgruppe mit 1 oder mehr und 4 oder weniger Kohlenstoffatomen dar, stellen $R_{21}$, $R_{22}$, $R_{27}$ und $R_{28}$ jeweils unabhängig ein Wasserstoffatom, eine Alkoxylgruppe mit 1 oder mehr und 4 oder weniger Kohlenstoffatomen oder eine Alkylgruppe mit 1 oder mehr und 4 oder weniger Kohlenstoffatomen dar, stellen n, m, l, q, s und t jeweils unabhängig eine ganze Zahl von 1 oder mehr und 8 oder weniger dar, stellen p und r jeweils unabhängig eine ganze Zahl von 4 oder mehr und 12 oder weniger dar, stellen x und y jeweils 0 oder 1 dar und stellen * und ** Stellen dar, die zu einem Siliciumatom bzw. einem Sauerstoffatom in der Formel (1) binden:

Formel (2) $GeO_{4/2}$

Formel (3) $MO_{4/2}$

Formel (4) $TaO_{5/2}$

in der Formel (3) stellt M irgendein Element ausgewählt aus der Gruppe bestehend aus Ti, Zr und Hf dar.

2. Ladungselement nach Anspruch 1, wobei in der Polymerverbindung $R_1$ und $R_2$ in der Formel (1) jeweils unabhängig irgendeine der folgenden Formeln (9) bis (12) darstellen:

Formel (9)

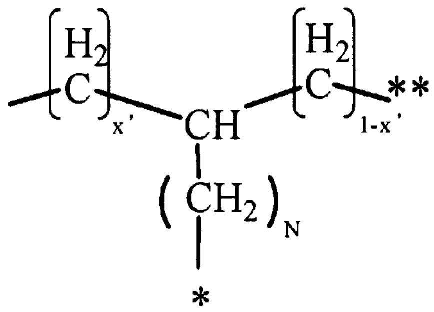

Formel (10)

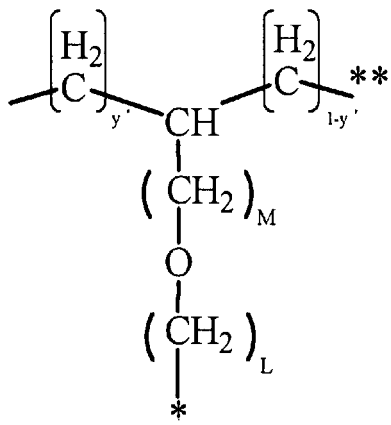

Formel (11)

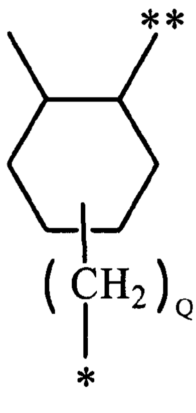

Formel (12)

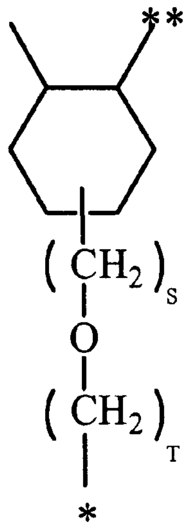

in den Formeln (9) bis (12) stellen N, M, L, Q, S und T jeweils unabhängig eine ganze Zahl von 1 oder mehr und 8 oder weniger dar, stellen x' und y' jeweils unabhängig 0 oder 1 dar, und stellen * und ** Stellen dar, die zu einem Siliciumatom bzw. einem Sauerstoffatom in der Formel (1) binden.

**3.** Ladungselement nach Anspruch 1 oder 2, wobei ein Verhältnis "(M+Ta+Ge)/Si" einer Gesamtsumme der Anzahlen an M, Ta und Ge Atomen zu der Anzahl an Siliciumatomen in der Polymerverbindung 0,10 oder mehr und 12,50 oder weniger ist.

**4.** Ladungselement nach einem der Ansprüche 1 bis 3, wobei die Polymerverbindung ein vernetztes Produkt eines hydrolysierten Kondensats aus einer hydrolysierbaren Verbindung mit einer durch eine Formel (13) dargestellten Struktur, zumindest einer aus hydrolysierbaren Verbindungen mit durch die Formeln (14) bis (17) dargestellten Strukturen und einer durch eine Formel (18) dargestellten hydrolysierbaren Verbindung umfasst:

| | |
|---|---|
| Formel (13) | $R_{33}$-Si ($OR_{34}$) ($OR_{35}$) ($OR_{36}$) |
| Formel (14) | Ti ($OR_{37}$) ($OR_{38}$) ($OR_{39}$) ($OR_{40}$) |
| Formel (15) | Zr ($OR_{41}$ ($OR_{42}$) ($OR_{43}$ ($OR_{44}$) |
| Formel (16) | Hf ($OR_{45}$) ($OR_{46}$) ($OR_{47}$) ($OR_{48}$) |
| Formel (17) | Ta ($OR_{49}$) ($OR_{50}$) ($OR_{51}$) ($OR_{52}$) ($OR_{53}$) |
| Formel (18) | Ge ($OR_{54}$) ($OR_{55}$) ($OR_{56}$) ($OR_{57}$) |

in der Formel (13) stellt $R_{33}$ irgendeine der Formeln (19) bis (22) dar, die jeweils eine Epoxygruppe aufweisen, und stellen $R_{34}$ bis $R_{36}$ jeweils unabhängig eine Alkylgruppe mit 1 oder mehr und 4 oder weniger Kohlenstoffatomen dar, und in den Formeln (14) bis (18) stellen $R_{37}$ bis $R_{57}$ jeweils unabhängig eine Alkylgruppe mit 1 oder mehr und 9 oder weniger Kohlenstoffatomen dar:

Formel (19)

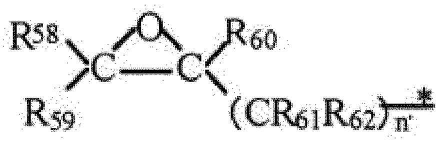

Formel (20)

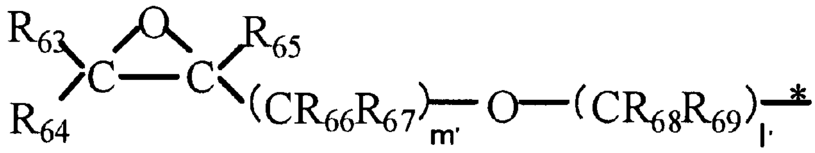

Formel (21)

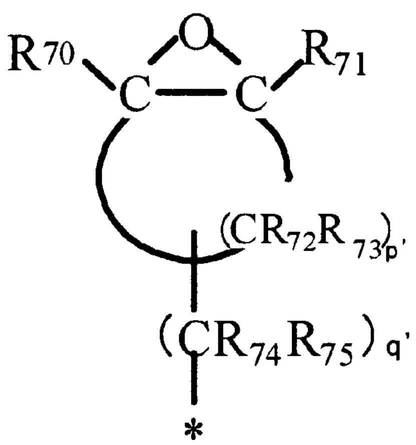

Formel (22)

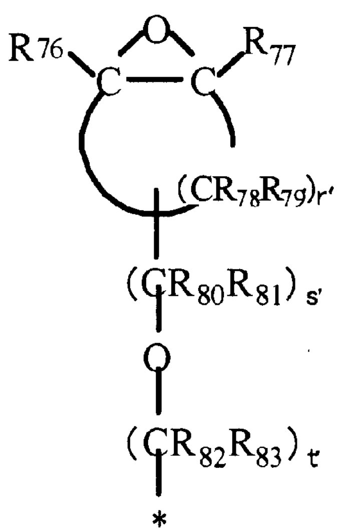

in den Formeln (19) bis (22) stellen $R_{58}$ bis $R_{60}$, $R_{63}$ bis $R_{65}$, $R_{70}$, $R_{71}$, $R_{76}$ und $R_{77}$ jeweils unabhängig ein Was-

serstoffatom, eine Alkylgruppe mit 1 oder mehr und 4 oder weniger Kohlenstoffatomen, eine Hydroxylgruppe, eine Carboxylgruppe oder eine Aminogruppe dar, stellen $R_{61}$, $R_{62}$, $R_{66}$ bis $R_{69}$, $R_{74}$, $R_{75}$ und $R_{80}$ bis $R_{83}$ jeweils unabhängig ein Wasserstoffatom oder eine Alkylgruppe mit 1 oder mehr und 4 oder weniger Kohlenstoffatomen dar, stellen $R_{72}$, $R_{73}$, $R_{78}$ und $R_{79}$ jeweils unabhängig ein Wasserstoffatom, eine Alkoxylgruppe mit 1 oder mehr und 4 oder weniger Kohlenstoffatomen oder eine Alkylgruppen mit 1 oder mehr und 4 oder weniger Kohlenstoffatomen dar, stellen n', m', l', q', s' und t' jeweils unabhängig eine ganze Zahl von 1 oder mehr und 8 oder weniger dar, stellen p' und r' jeweils eine ganze Zahl von 4 oder mehr und 12 oder weniger dar, und stellt * eine Stelle dar, die zu einem Siliciumatom in der Formel (13) bindet.

**5.** Ladungselement nach einem der Ansprüche 1 bis 4, wobei die Polymerverbindung ein vernetztes Produkt aus einer hydrolysierbaren Verbindung mit einer durch eine Formel (13) dargestellen Struktur, zumindest einer aus hydrolysierbaren Verbindungen mit durch die Formeln (14) bis (17) dargestellten Strukturen, einer durch eine Formel (18) dargestellten hydrolysierbaren Verbindung und einer hydrolysierbaren Verbindung mit einer durch die folgende Formel (23) dargestellten Struktur umfasst:

Formel (23) $R_{84}$-S i $(OR_{85})$ $(OR_{86})$ $(OR_{87})$

in der Formel (23) stellt $R_{84}$ eine Alkylgruppe oder eine Arylgruppe dar und stellen $R_{85}$ bis $R_{87}$ jeweils eine Kohlenwasserstoffgruppe dar.

**6.** Verfahren zum Herstellen des Ladungselements nach Anspruch 4, wobei das Verfahren die Schritte umfasst:

(i) Bilden, auf einem äußeren Umfang der elastischen Schicht, die auf einem äußeren Umfang des Trägers platziert ist, eines Beschichtungsfilms aus einem Beschichtungsmittel, das ein hydrolysiertes Kondensat enthält, das aus der durch die Formel (13) dargestellten hydrolysierbaren Verbindung, zumindest einer aus den durch die Formeln (14) bis (17) dargestellten hydrolysierbaren Verbindungen und der durch die Formel (18) dargestellten hydrolysierbaren Verbindung synthetisiert ist; und
(ii) Spalten einer Epoxidgruppe des hydrolysierten Kondensats, um das hydrolysierte Kondensat zu vernetzen, um die Polymerverbindung herzustellen,

wobei der Beschichtungsfilm im Schritt (ii) aushärtet und schrumpft, um die Oberflächenschicht mit dem Riss herzustellen.

**7.** Verfahren zum Herstellen des Ladungselements nach Anspruch 5, wobei das Verfahren die Schritte umfasst:

(i) Bilden, auf einem äußeren Umfang der elastischen Schicht, die auf einem äußeren Umfang des Trägers platziert ist, eines Beschichtungsfilms aus einem Beschichtungsmittel, das ein hydrolysiertes Kondensat enthält, das aus der durch die Formel (13) dargestellten hydrolysierbaren Verbindung, der durch die Formel (23) dargestellten hydrolysierbaren Verbindung, zumindest einer aus den durch die Formeln (14) bis (17) dargestellten hydrolysierbaren Verbindungen und der durch die Formel (18) dargestellten hydrolysierbaren Verbindung synthethisiert ist; und
(ii) Spalten einer Epoxidgruppe des hydrolysierten Kondensats, um das hydrolysierte Kondensat zu vernetzen, um die Polymerverbindung herzustellen,

wobei der Beschichtungsfilm im Schritt (ii) aushärtet und schrumpft, um die Oberflächenschicht mit dem Riss herzustellen.

**8.** Elektrophotographischer Apparat, der umfasst:

ein elektrophotographisches photosensitives Element; und
das Ladungselement nach einem der Ansprüche 1 bis 5, das platziert ist, um fähig zu sein, das elektrophotographische photosensitive Element zu laden.

**9.** Prozesskartusche, die umfasst:

ein elektrophotographisches photosensitives Element; und
das Ladungselement nach einem der Ansprüche 1 bis 5 zum Laden des elektrophotographischen photosensitiven Elements, wobei

die Prozesskartusche abnehmbar zu einem Hauptkörper eines elektrophotographischen Apparats montierbar ist.

## Revendications

**1.** Elément de charge, comprenant :

un support ;
une couche élastique ; et
une couche de surface,

dans lequel :

la couche de surface comprend un composé polymère ayant
au moins une liaison choisie entre une liaison Si-O-M et une liaison Si-O-Ta,
au moins une liaison choisie entre une liaison M-O-Ge et une liaison Ta-O-Ge, et
une liaison Si-O-Ge ;
le composé polymère possède
un motif structural représenté par la formule (1) suivante,
un motif structural représenté par la formule (2) suivante, et
au moins un motif structural choisi entre un motif structural représenté par la formule (3) suivante et un motif structural représenté par la formule (4) suivante ; et
l'élément de charge comporte une fissure s'étendant d'une de ses surfaces à la couche élastique, et la fissure a un bord soulevé de manière convexe en rendant rugueuse la surface de l'élément de charge, sous réserve que M représente n'importe quel élément choisi dans le groupe consistant en Ti, Zr et Hf :

Formule (1)

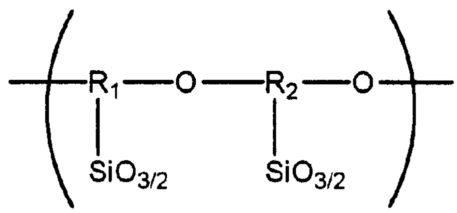

dans la formule (1), $R_1$ et $R_2$ représentent chacun indépendamment l'une quelconque des formules (5) à (8) suivantes :

Formule (5)

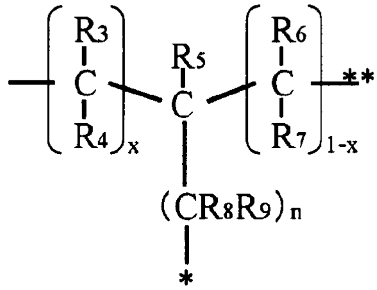

Formule (6)

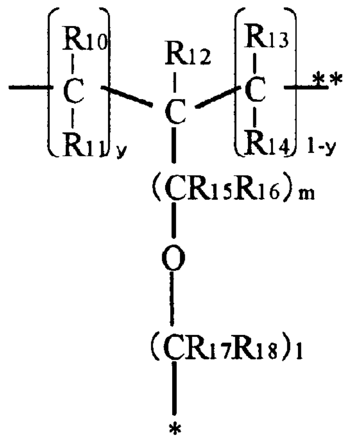

Formule (7)

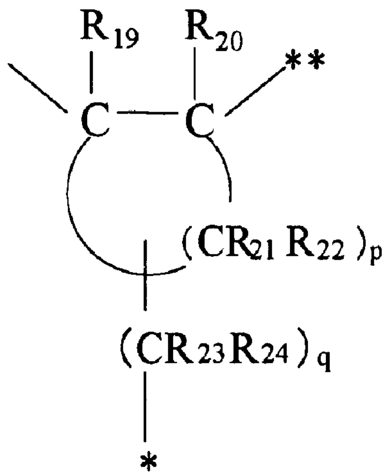

Formule (8)

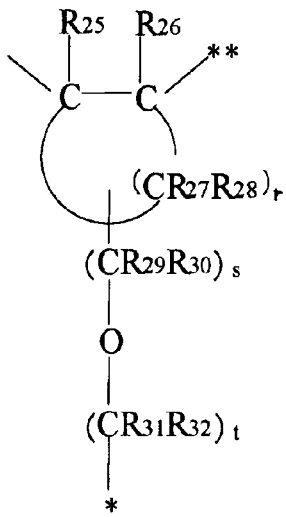

dans les formules (5) à (8), $R_3$ à $R_7$, $R_{10}$ à $R_{14}$, $R_{19}$, $R_{20}$, $R_{25}$ et $R_{26}$ représentent chacun indépendamment un atome d'hydrogène, un groupe alkyle ayant 1 ou plus de 1 à 4 ou moins de 4 atomes de carbone, un groupe hydroxyle, un groupe carbonyle ou un groupe amino, $R_8$, $R_9$, $R_{15}$ à $R_{18}$, $R_{23}$, $R_{24}$ et $R_{29}$ à $R_{32}$ représentent chacun indépendamment un atome d'hydrogène ou un groupe alkyle ayant 1 ou plus de 1 à 4 ou moins de 4 atomes de

carbone, $R_{21}$, $R_{22}$, $R_{27}$ et $R_{28}$ représentent chacun indépendamment un atome d'hydrogène, un groupe alkoxyle ayant 1 ou plus de 1 à 4 ou moins de 4 atomes de carbone, ou un groupe alkyle ayant 1 ou plus de 1 à 4 ou moins de 4 atomes de carbone, n, m, l, q, s et t représentent chacun indépendamment un nombre entier de 1 ou plus de 1 à 8 ou moins de 8, p et r représentent chacun indépendamment un nombre entier de 4 ou plus de 4 à 12 ou moins de 12, x et y sont chacun égaux indépendamment à 0 ou 1, et * et ** représentent des sites pour la liaison avec un atome de silicium et un atome d'oxygène dans la formule (1), respectivement :

Formule (2) $GeO_{4/2}$

Formule (3) $MO_{4/2}$

Formule (4) $TaO_{5/2}$

dans la formule (3), M représente n'importe quel élément choisi dans le groupe consistant en Ti, Z et Hf.

**2.** Elément de charge suivant la revendication 1, dans lequel, dans le composé polymère, $R_1$ et $R_2$ dans la formule (1) représentent chacun indépendamment l'une quelconque des formules (9) à (12) suivantes :

Formule (9)

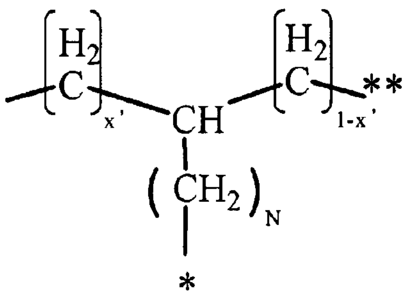

Formule (10)

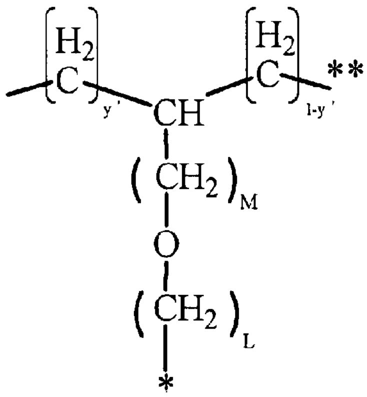

Formule (11)

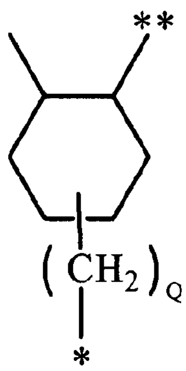

Formule (12)

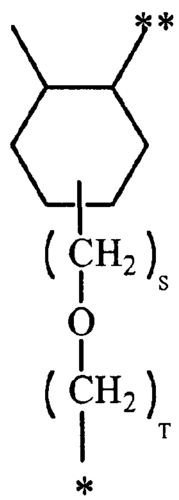

dans les formules (9) à (12), N, M, L, Q, S et T représentent chacun indépendamment un nombre entier de 1 ou plus de 1 à 8 ou moins de 8, x' et y' sont chacun égaux indépendamment à 0 ou 1, et * et ** représentent des sites pour la liaison avec un atome de silicium et un atome d'oxygène dans la formule (1), respectivement.

**3.** Elément de charge suivant la revendication 1 ou 2, dans lequel un rapport "(M+Ta+GE)/Si)" de la somme totale des nombres d'atomes de M, Ta et Ge au nombre d'atomes de silicium dans le composé polymère va de 0,10 ou plus à 12,50 ou moins.

**4.** Elément de charge suivant l'une quelconque des revendications 1 à 3, dans lequel le composé polymère comprend un produit réticulé d'un condensat hydrolysé d'un composé hydrolysable ayant une structure représentée par une formule (13), d'au moins un des composés hydrolysables ayant des structures représentées par les formules (14) à (17), et d'un composé hydrolysable représenté par une formule (18) :

| | |
|---|---|
| Formule (13) | $R_{33}$-Si $(OR_{34})$ $(OR_{35})$ $(OR_{36})$ |
| Formule (14) | Ti $(OR_{37})$ $(OR_{38})$ $(OR_{39})$ $(OR_{40})$ |
| Formule (15) | Zr $(OR_{41})$ $(OR_{42})$ $(OR_{43})$ $(OR_{44})$ |
| Formule (16) | Hf $(OR_{45})$ $(OR_{46})$ $(OR_{47})$ $(OR_{48})$ |
| Formule (17) | Ta $(OR_{49})$ $(OR_{50})$ $(OR_{51})$ $(OR_{52})$ $(OR_{53})$ |
| Formule (18) | Ge $(OR_{54})$ $(OR_{55})$ $(OR_{56})$ $(OR_{57})$ |

dans la formule (13), $R_{33}$ représente l'une quelconque des formules (19) à (22) comportant chacune un groupe époxy, et $R_{34}$ à $R_{36}$ représentent chacun indépendamment un groupe alkyle ayant 1 ou plus de 1 à 4 ou moins de 4 atomes de carbone et, dans les formules (14) à (18), $R_{37}$ à $R_{57}$ représentent chacun indépendamment un groupe alkyle ayant 1 ou plus de 1 à 9 ou moins de 9 atomes de carbone :

Formule (19)

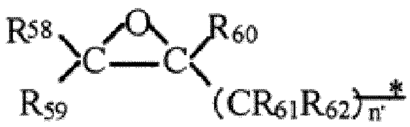

Formule (20)

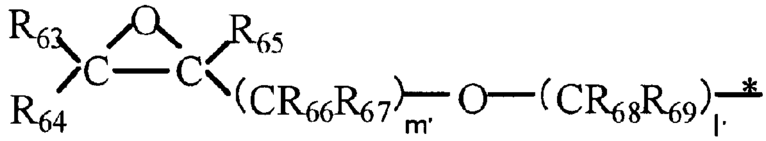

Formule (21)

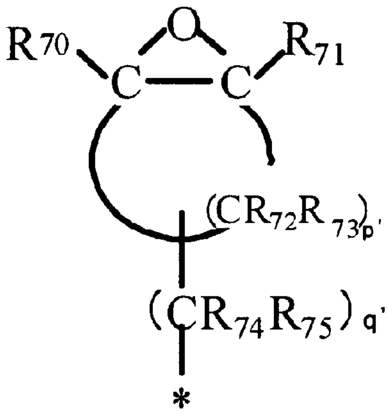

Formule (22)

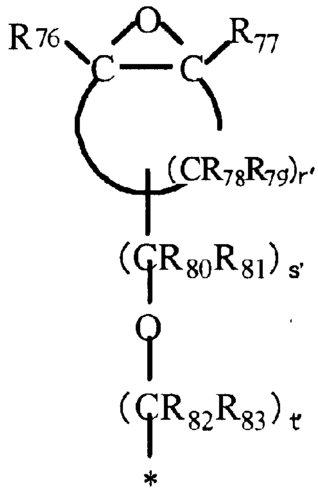

dans les formules (19) à (22), $R_{58}$ à $R_{60}$, $R_{63}$ à $R_{65}$, $R_{70}$, $R_{71}$, $R_{76}$ et $R_{77}$ représentent chacun indépendamment un atome d'hydrogène, un groupe alkyle ayant 1 ou plus de 1 à 4 ou moins de 4 atomes de carbone, un groupe

hydroxyle, un groupe carbonyle ou un groupe amino, $R_{61}$, $R_{62}$, $R_{66}$ à $R_{69}$, $R_{74}$, $R_{75}$ et $R_{80}$ à $R_{83}$ représentent chacun indépendamment un atome d'hydrogène ou un groupe alkyle ayant 1 ou plus de 1 à 4 ou moins de 4 atomes de carbone, $R_{72}$, $R_{73}$, $R_{78}$ et $R_{79}$ représentent chacun indépendamment un atome d'hydrogène, un groupe alkoxyle ayant 1 ou plus de 1 à 4 ou moins de 4 atomes de carbone, ou un groupe alkyle ayant 1 ou plus de 1 à 4 ou moins de 4 atomes de carbone, n', m', l', q', s' et t' représentent chacun indépendamment un nombre entier de 1 ou plus de 1 à 8 ou moins de 8, p' et r' représentent chacun indépendamment un nombre entier de 4 ou plus de 4 à 12 ou moins de 12, et * représente un site pour la liaison avec un atome de silicium dans la formule (13).

**5.** Elément de charge suivant l'une quelconque des revendications 1 à 4, dans lequel le composé polymère comprend un produit réticulé d'un composé hydrolysable ayant une structure représentée par une formule (13), d'au moins un des composés hydrolysables ayant des structures représentées par les formules (14) à (17), d'un composé hydrolysable représenté par une formule (18) et d'un composé hydrolysable ayant une structure représentée par la formule (23) suivante :

Formule (23) $R_{84}$-Si $(OR_{85})$ $(OR_{86})$ $(OR_{87})$

dans la formule (23), $R_{84}$ représente un groupe alkyle ou un groupe aryle et $R_{85}$ à $R_{87}$ représentent chacun indépendamment un groupe hydrocarboné.

**6.** Procédé de production de l'élément de charge suivant la revendication 4, le procédé comprenant les étapes de :

(i) formation, sur une périphérie extérieure de la couche élastique placée sur une périphérie extérieure du support, d'un film de revêtement formé d'un agent de revêtement contenant un condensat hydrolysé synthétisé à partir du composé hydrolysable représenté par la formule (13), d'au moins un des composés hydrolysables représentés par les formules (14) à (17) et du composé hydrolysable représenté par la formule (18) ; et
(ii) clivage d'un groupe époxy du condensat hydrolysé pour réticuler le condensat hydrolysé afin de produire le composé polymère,

où, dans l'étape (ii), le film de revêtement durcit et se rétracte pour produire la couche de surface comportant la fissure.

**7.** Procédé de production de l'élément de charge suivant la revendication 5, le procédé comprenant les étapes de :

(i) formation, sur une périphérie extérieure de la couche élastique placée sur une périphérie extérieure du support, d'un film de revêtement formé d'un agent de revêtement contenant un condensat hydrolysé synthétisé à partir du composé hydrolysable représenté par la formule (13), du composé hydrolysable représenté par la formule (23), d'au moins un des composés hydrolysables représentés par les formules (14) à (17) et du composé hydrolysable représenté par la formule (18) ; et
(ii) clivage d'un groupe époxy du condensat hydrolysé pour réticuler le condensat hydrolysé afin de produire le composé polymère,

où, dans l'étape (ii), le film de revêtement durcit et se rétracte pour produire la couche de surface comportant la fissure.

**8.** Appareil électrophotographique, comprenant :

un élément photosensible électrophotographique ; et
l'élément de charge suivant l'une quelconque des revendications 1 à 5 placé de manière à pouvoir charger l'élément photosensible électrophotographique.

**9.** Cartouche de traitement, comprenant :

un élément photosensible électrophotographique ; et
l'élément de charge suivant l'une quelconque des revendications 1 à 5 pour charger l'élément photosensible électrophotographique, où
la cartouche de traitement peut être montée de manière amovible dans le corps principal d'un appareil électrophotographique.

FIG. 1

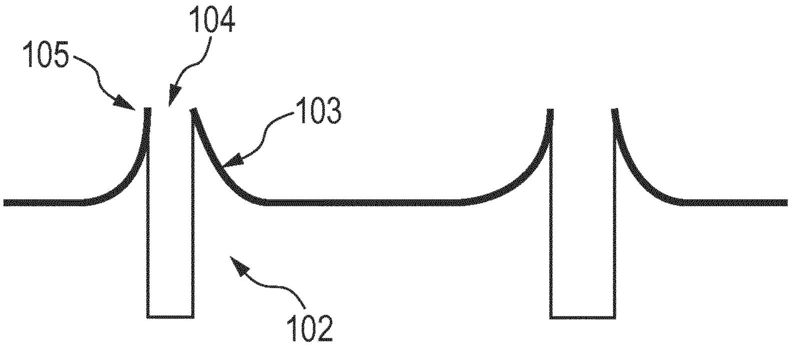


FIG. 2

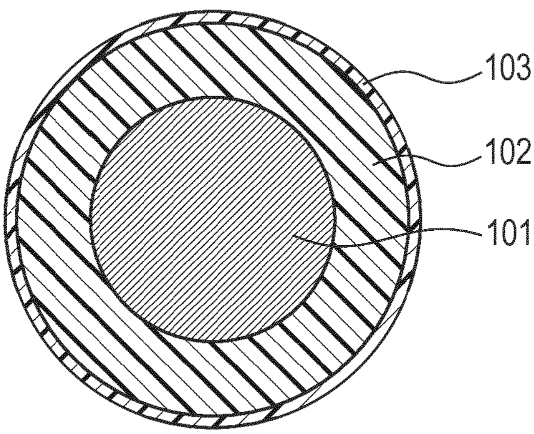


FIG. 3

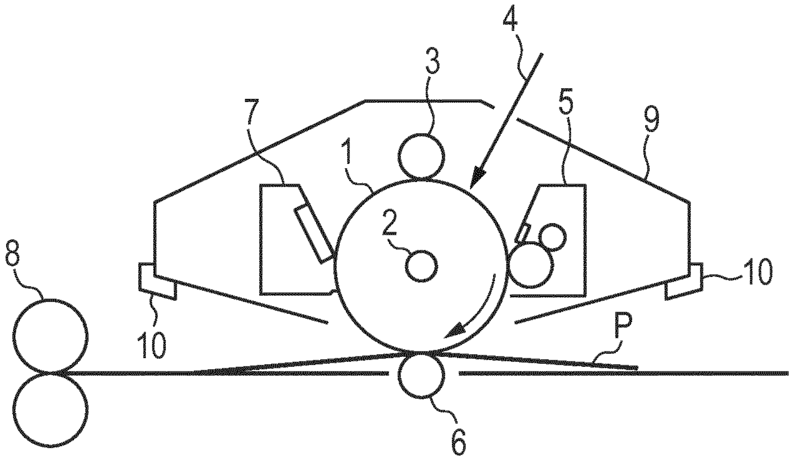

FIG. 4

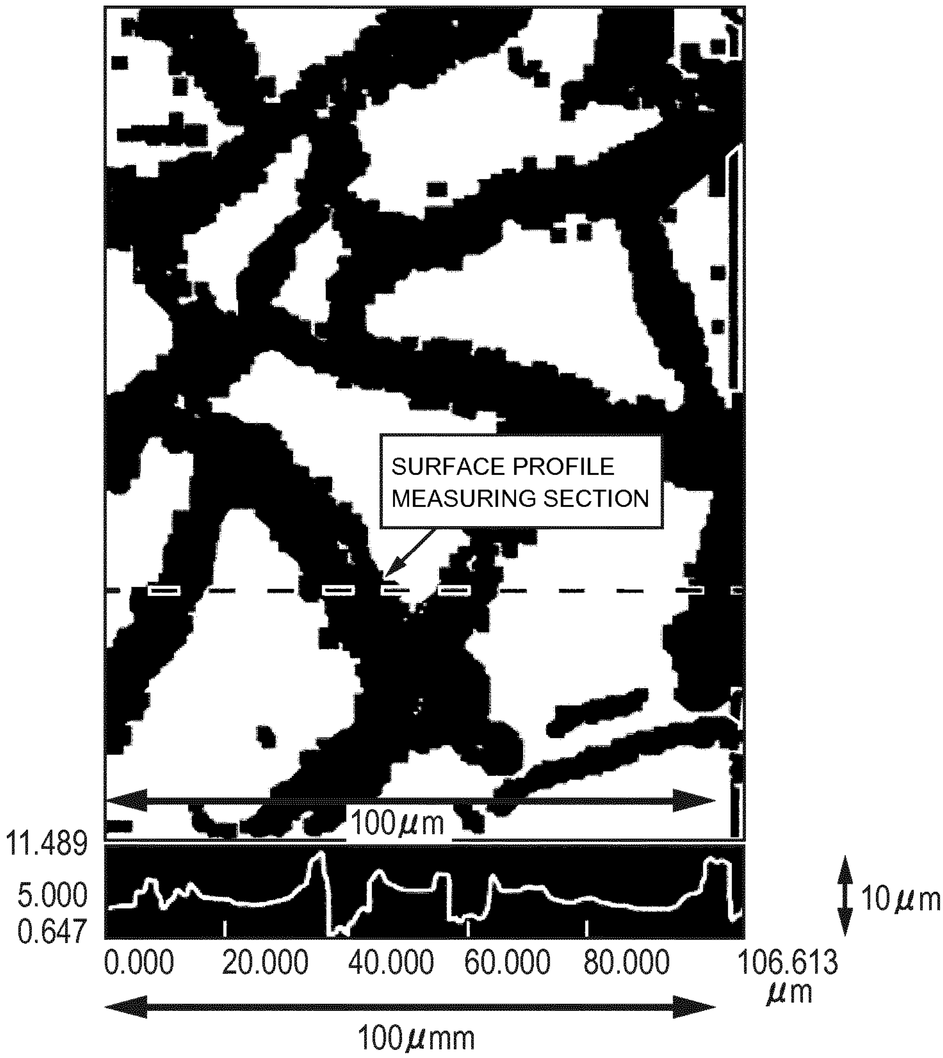
SURFACE PROFILE
MEASURING SECTION
100μm
11.489
5.000
0.647
10μm
0.000
20.000
40.000
60.000
80.000
106.613
μm
100μmm

FIG. 5

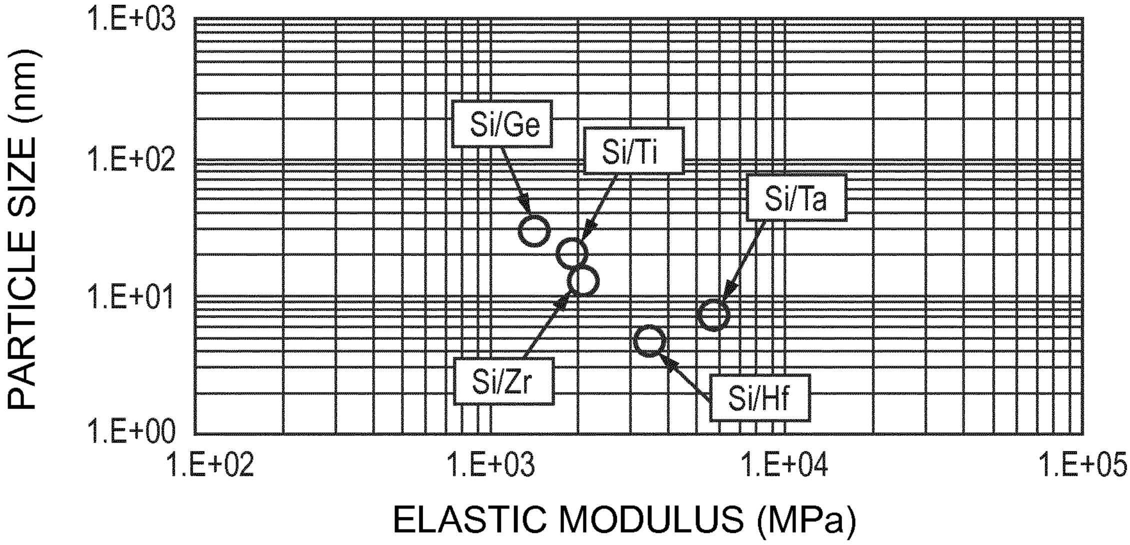
PARTICLE SIZE (nm)
1.E+03
1.E+02
1.E+01
1.E+00
Si/Ge
Si/Ti
Si/Ta
Si/Zr
Si/Hf
1.E+02
1.E+03
1.E+04
1.E+05
ELASTIC MODULUS (MPa)

FIG. 6

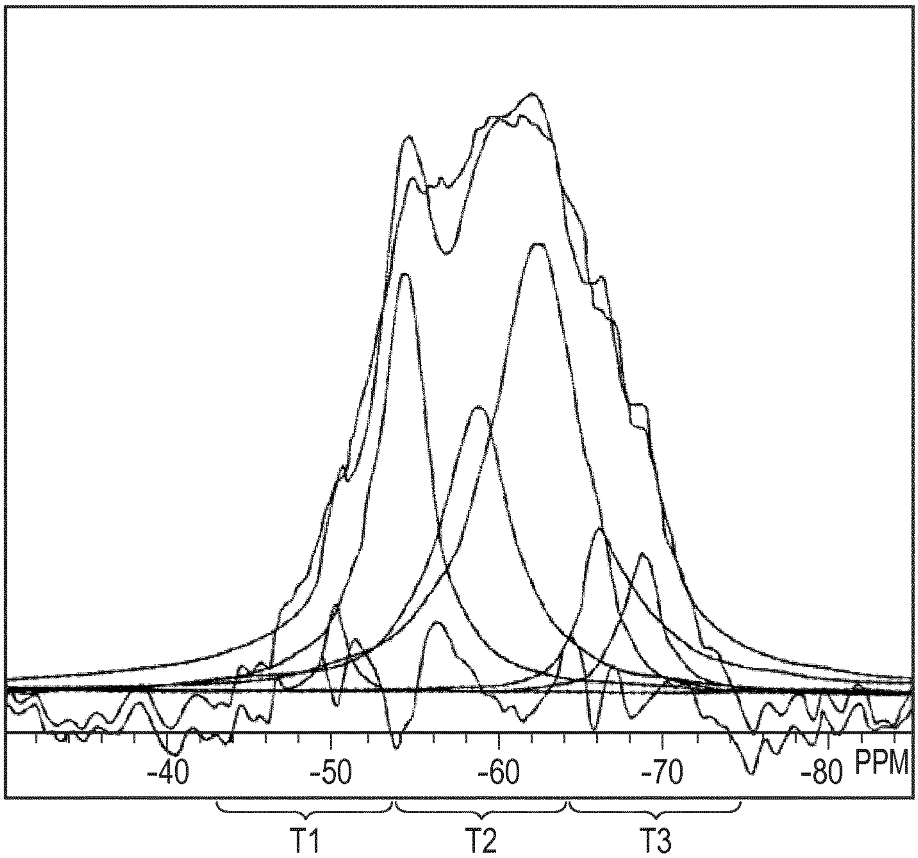
-40
-50
-60
-70
-80
PPM
T1
T2
T3

FIG. 7

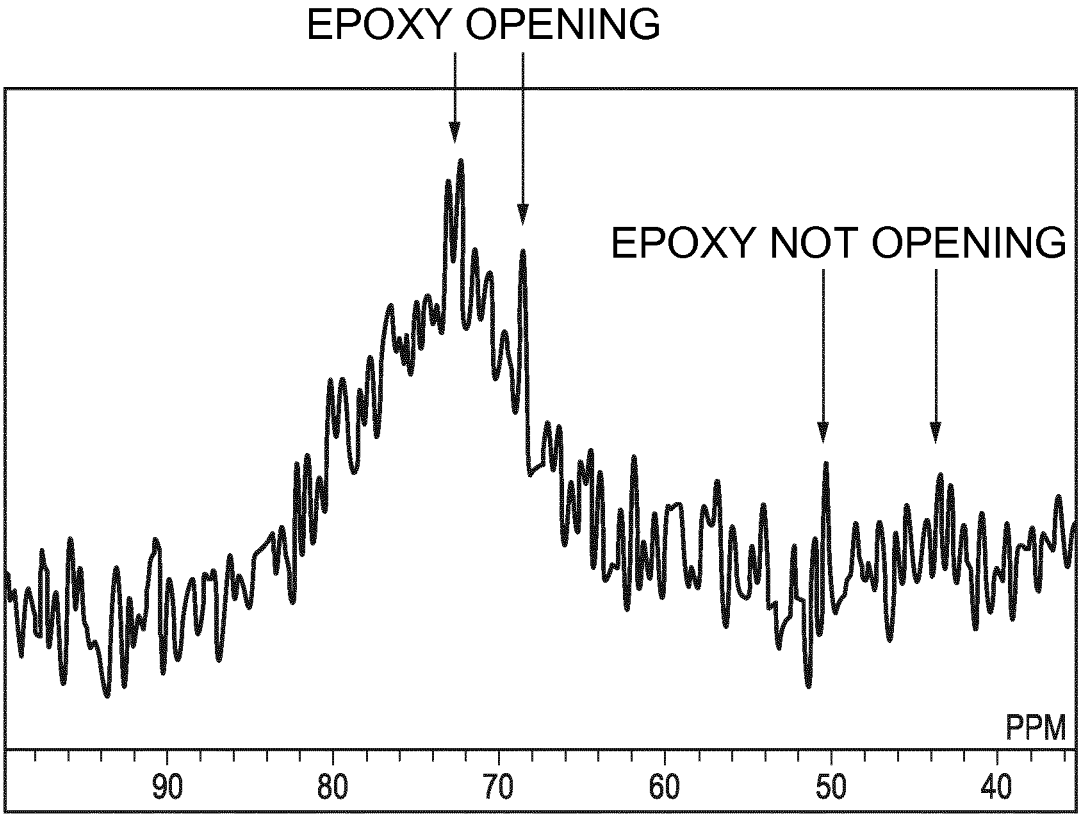

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005345801 A
- JP 2009086263 A